# EUROPEAN PATENT SPECIFICATION

(11) **EP 0 538 472 B1**
(45) Date of publication and mention of the grant of the patent: **29.10.1997**
(21) Application number: 91912479.2
(22) Date of filing: 10.07.1991
(51) Int. Cl.: H02K 1/27, H02K 15/03, H02K 9/20

(54) **ROTOR OF BRUSHLESS MOTOR AND MANUFACTURE THEREOF**
LÄUFER EINES BÜRSTENLOSEN MOTORS UND HERSTELLUNG DESSELBEN
ROTOR POUR MOTEUR SANS BALAIS ET PROCEDE DE FABRICATION ASSOCIE

(30) Priority: 12.07.1990 JP 184491/90; 19.10.1990 JP 281537/90; 20.11.1990 JP 315398/90; 20.11.1990 JP 121724/90 U; 21.11.1990 JP 122332/90 U; 20.02.1991 JP 26420/91; 20.03.1991 JP 57037/91; 19.04.1991 JP 88646/91; 23.04.1991 JP 92361/91; 01.05.1991 JP 100150/91
(43) Date of publication of application: 28.04.1993
(73) Proprietor: SEIKO EPSON CORPORATION, Shinjuku-ku Tokyo 160 (JP)
(72) Inventor: NAGATE, Takashi, Seiko Epson Corporation, Suwa-shi Nagano 392 (JP); ENDO, Kenichi, Seiko Epson Corporation, Suwa-shi Nagano 392 (JP); KOIKE, Yoshikazu, Seiko Epson Corporation, Suwa-shi Nagano 392 (JP); SETO, Takeshi, Seiko Epson Corporation, Suwa-shi Nagano 392 (JP); YAMAGISHI, Yoshihiko, Seiko Epson Corporation, Suwa-shi Nagano 392 (JP)
(74) Representative: Lehn, Werner, Dipl.-Ing.
(86) International application number: PCT/JP91/00925
(87) International publication number: WO 92/01326

(56) References cited:
- EP-A- 0 163 747
- FR-A- 2 425 754
- FR-A- 2 548 843
- JP-A- 1 252 146
- JP-A- 2 022 804
- JP-A-48 035 302
- JP-A-57 016 548
- JP-B-49 033 482
- JP-U-54 065 309
- JP-U-59 097 546
- JP-Y-30 015 907
- JP-Y-36 029 332
- JP-Y-46 018 489
- JP-Y-49 021 525
- US-A- 4 358 696
- US-A- 4 476 408
- PATENT ABSTRACTS OF JAPAN vol. 14, no. 200 (E-920) 24 April 1990 & JP-A-02 041 645 (FANUC) 9 February 1990
- PATENT ABSTRACTS OF JAPAN vol. 12, no. 310 (E-648) 23 August 1988 & JP-A-63 077 355 (TOSHIBA) 7 April 1988
- PATENT ABSTRACTS OF JAPAN vol. 6, no. 42 (E-098) 16 March 1982 & JP-A-56 157 238 (FANUC) 4 December 1981

## Description

The present invention relates to a rotor for a brushless motor suitable for operation at high r.p.m. with high efficiency.

A brushless electromotor generally comprises a cylindrical rotor provided on the outer peripheral surface thereof with permanent magnets made of ferrite or the like.

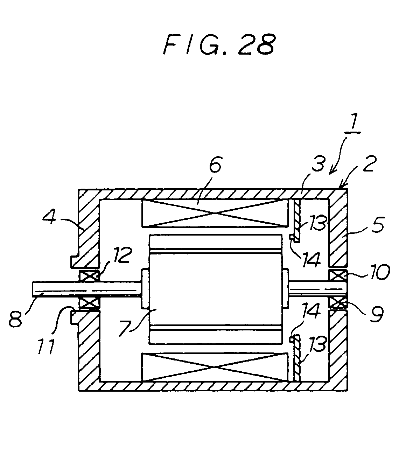

Referring to Fig. 28 of the accompanying drawings, the constitution of such conventional brushless electromotor is exemplarily shown. The brushless electromotor generally indicated by reference numeral 1 comprises a motor casing (i.e. stator) 2 assembled from a cylindrical side wall 3, and a front face plate 4 and a rear face plate 5 both adapted to block up opposite ends of said side wall 3, respectively. Inside said side wall 3, there are provided a plurality of driving coils 6 arranged to define a cylindrical array and fixed to the inner surface of said side wall 3. A rotor 7 is concentrically provided with a rotatable shaft 8 fixed thereto. The rotatable shaft 8 projects from opposite ends of the rotor 7 so as to be rotatably supported at one end in a bearing 10 held in an opening 9 formed through the rear face plate 5 of the motor casing 2 and at the other end in a bearing 12 held in an opening 11 formed through the front face plate 4 of the motor casing 2. There is provided inside the side wall 3 of the motor casing 2 an annular member 13 adapted to hold a plurality of magenetic pole sensors 14 so that these sensors 14 are properly positioned closely adjacent to one end surface of the rotor 7.

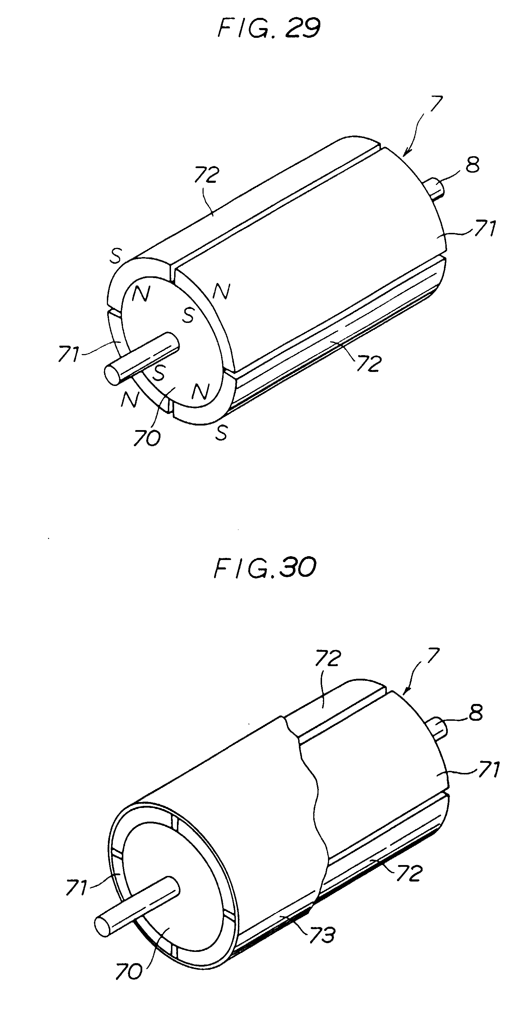

Referring to Fig. 29, an exemplary prior art rotor 7 is isometrically shown with the rotatable shaft 8 having been inserted into a cylindrical yoke 70 and integrated therewith. This yoke 70 carries on its outer peripheral surface a pair of arcuate permanent magnets 71 magnetized to have N-poles on their outer sides and S-poles on their inner sides and another pair of arcuate permanent magnets 72 magnetized to have S-poles on their outer sides and N-poles on their inner sides. The respective pairs of permanent magnets 71, 72 are alternately arranged around the coke 70 and bonded thereto.

In this brushless electromotor 1, said magnetic pole sensors 14 detect positions of the magnetic poles of the rotor 7 and, in response thereto, a control circuit (not shown) supplies the corresponding driving coils 6 with electric current so that an interaction of electric current and magnetic flux causes the rotor 7 to be rotated. As it has been rotated in this manner, the rotor 7 now presents new magnetic pole positions to be detected by the magnetic pole sensors 14 again and said control circuit supplies the another driving coils 6 with electric current, causing the rotor 7 to be rotated again. Such operation is repeated and thereby the rotor 7 is continuously rotated. The rotary force thus generated is taken out as a motive power from the electric motor by way of the rotatable shaft 8.

Referring to Fig. 30, another example of the conventional rotor 7 is isometrically shown, in which said permanent magnets 71 and 72 are covered with a protective member 73 of nonmagnetic metal to prevent these permanent magnets 71 and 72 bonded to the rotor 7 from flying off due to centrifugal force as the electromotor 1 is rotated at a high r.p.m.

However, in view of the fact, that the maximum energy integral as well as the residual flux density are as low as 3.3 MGOe and 3.8 KG, respectively, in the brushless electromotor utilizing the ferrite magnets, a permeance of the magnetic circuit should be increased in order to develop a torque sufficient to drive the electromotor and consequently the number of the magnets should be increased, making the electromotor disadvantageously bulky.

When the electromotor is used in the scroll type compressor or the like usually adapted to be rotated at high r.p.m., the permanent magnets may be destroyed or flying off, because a stress due to a centrifugal force generated by the rotation of the electromotor at high r.p.m. becomes greater than a material strength of the permanent magnets and an adhesion of these magnets to the rotor.

Furthermore, covering the rotor with the protective member to avoid said flying-off of the permanent magnets not only complicates the manufacturing process of the rotor but also enlarges a gap defined between the rotor and the stator substantially by the thickness of said protective member, and correspondingly increases the magnetic resistance. In a consequence, the magnet density decreases and the efficiency is significantly lowered.

Reference is made to US-A-4 358 696 and US-A-4 476 408, both of which disclose a permanent magnet rotor with a body formed of laminations having slots therein accommodating permanent magnets.

The present invention has a principal object of enabling the permanent magnets to be installed in slots in a laminated rotor body with little applied force but, once installed, they are reliably prevented from dropping off.

A subsidiary object of the present invention is to provide an improved rotor for use in the brushless electromotor, which can achieve a high efficiency with a compact construction and free from the fear that the permanent magnets might be destroyed or fly off during rotation of the electromotor at high r.p.m.

According to the invention there is provided a rotor for a brushless motor, comprising a yoke formed from a plurality of silicon steel sheets laminated together and along its outer periphery with an even number of magnetic poles, slots provided in the magnetic poles to accommodate permanent magnets, and permanent magnets accommodated respectively in the slots, characterised in that the inner periphery of the yoke defining each slot is provided with projections adapted to be engaged with the respective permanent magnet as the latter is forced into the slot.

In one embodiment, the improved rotor has permanent magnets for use in a brushless electromotor, said rotor comprising a yoke formed from a plurality of silicon steel sheets laminated together and provided along its outer periphery with at least four magnetic poles, said magnetic poles being alternately formed substantially at equal distances from a rotational axis with slots to accommodate the respective permanent magnets, and said permanent magnets being accommodated in the associated slots so that the sides of said permanent magnets facing a rotatable shaft have the same polarity.

With such arrangement, mutual repulsion of the diametrically opposed magnetic poles provides the rotor with the magnetic poles of which number is twice the number of the permanent magnets.

The permanent magnets are inserted into the respective slots, radially held in the material having a high magnetic permeability and thereby flying-off of the permanent magnets due to high r.p.m. rotation is avoided. Accordingly, the need for the member covering the outer periphery of the rotor in order to prevent the permanent magnets from flying off is eliminated and, as a result, in iron loss due to use of such member can be minimized. The iron loss is further reduced by forming the yoke from the laminated steel sheets.

The permanent magnets have a simple configuration and required no high precision upon finishing the surface. This leads to a drastically facilitated production of the permanent magnet.

The invention also provides, a method of producing the rotor for a brushless electromotor, comprising the steps of forming said slots extending through said yoke with the inner periphery of the yoke defining each slot provided with said projections, filling the slots with powder of magnetic material and mixed with epoxy binder, compression-molding this mixture in a magnetic field applied substantially in a radial direction with respect to a rotatable shaft of the rotor and curing the compression-molded mixture with heat treatment to form the permanent magnets directly within the slots, with said projections of the yoke.

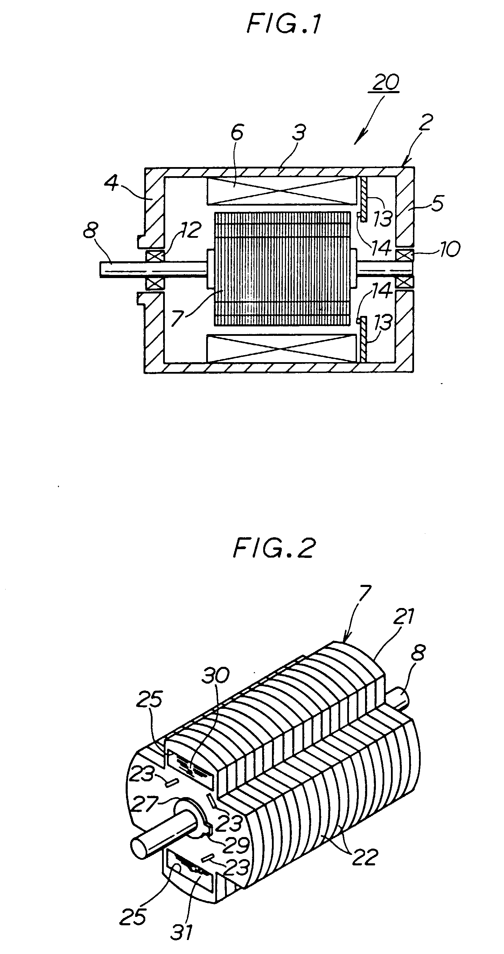

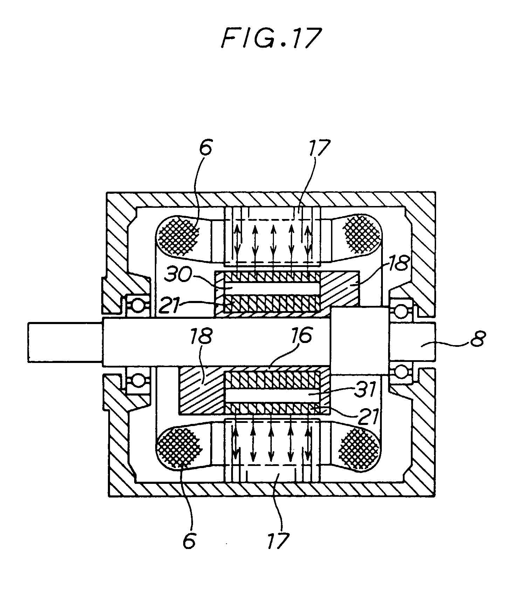

The invention will now be described by referring, by way of example, to the accompanying drawings, wherein Figures 1 to 17 and 22 to 25 are examples that are not in accordance with the invention but included to facilitate an understanding of the invention and to disclose preferred features of the invention, and Figures 28 to 30 illustrate an example of a conventional brushless electromotor and parts thereof, and wherein:-
- Fig. 1: is a vertical section illustrating a brushless electromotor using one example of permanent magnet rotor,
- Fig. 2: is a perspective view illustrating the permanent magnet rotor;
- Fig. 3: is a front view illustrating the silicon steel sheet in this example of the permanent magnet rotor;
- Fig. 4: is a schematic view illustrating a pattern described by lines of magnetic force generated in the permanent magnet rotor having been incorporated into the brushless electromotor;
- Fig. 5: is a front view illustrating a second example of the permanent magnet rotor in which the magnetic poles have different widths;
- Fig. 6: is a front view illustrating a third example of the permanent magnet rotor in which each magnetic poles is provided with a plurality of slits;
- Fig. 7: is a schematic view illustrating a pattern described by lines of magnetic force generated in the third example of the permanent magnet rotor provided with the slits and having been incorporated into the brushless electromotor;
- Fig. 8: is a front view illustrating a fourth example of the permanent magnet rotor having six magnetic poles;
- Fig. 9: is a sectional view illustrating, in an enlarged scale, a bridge formed in a fifth example of the permanent magnet rotor;
- Fig. 10: is a plan view of the silicon steel sheet in a sixth example of the permanent magnet rotor;
- Fig. 11: is a magnetic field analysis diagram illustrating a pattern described by lines of magnetic flux under a load torque;
- Fig. 12: is an exploded perspective view illustrating a seventh example of the permanent magnet rotor;
- Fig. 13: is a sectional view illustrating the rotor of Fig. 12 as assembled;
- Fig. 14: is a diagram illustrating a pattern described by lines of magnetic flux observed after the components are being finally assembled to define a magnetic circuit;
- Fig. 15: is a sectional view, taken along the axis, illustrating the brushless electromotor utilizing the permanent magnet rotor according to the first example;
- Fig. 16: is a perspective view illustrting an eighth example of the permanent magnet rotor;
- Fig. 17: is a sectional view, taken along the axis, illustrating the brushless electromotor utilizing the permanent magnet rotor according to the eighth example;
- Fig. 18: is an exploded perspective view illustrating a first embodiment of the permanent magnet rotor;
- Fig. 19: is a sectional view of this permanent magnet rotor as viewed transversely to the rotatable shaft thereof;
- Fig. 20: is a sectional view partially illustrating the yoke in this permanent magnet rotor in an enlarged scale transversely to the axis thereof;
- Fig. 21: is a sectional view partially illustrating the yoke in a variant of this embodiment in an enlarged scale transversely to the axis thereof;
- Fig. 22: is a sectional view, taken along the axis, illustrating a ninth example of the permanent magnet rotor in an enlarged scale;
- Fig. 23: is a perspective view illustrating an tenth example of the permanent magnet rotor;
- Fig. 24: is a perspective view illustrating a variant of this permanent magnet rotor;
- Fig. 25: is a transverse section view of the rotatable shaft in this example;
- Fig. 26: is a sectional side view of this permanent magnet rotor, illustrating one of the steps in manufacturing;
- Fig. 27: is a perspective view of the skewed permanent magnet rotor;
- Fig. 28: is a vertical section illustrating an example of a conventional brushless electromotor;
- Fig. 29: is a perspective view illustrating an example of the conventional permanent magnet rotor; and
- Fig. 30: is a perspective view illustrating another example of the permanent magnet rotor provided with a protective member.

Initially, the first example will be described in reference with Figs. 1 through 4.

Referrint to Fig. 1, there is illustrated the brushless electromotor indicated generally by reference numeral 20 having the permanent magnet rotor 7 constructed as the first embodiment of the invention. The brushless electromotor 20 comprises a motor casing (i.e. stator) 2 assembled from a cylindrical side wall 3, and a front face plate 4 and a rear face plate 5. Inside the wall 3, there are provided a plurality of driving coils 6 arranged to define a cylindrical array and fixed to the inner surface of the side wall 3. The rotor 7 is concentrically provided with a rotatable shaft 8 fixed thereto. The rotatable shaft 8 projects from opposite ends of the rotor 7 so as to be rotatably supported at one end in a bearing 10 carried by the rear face plate 5 of the motor casing 2 and at the other end in a bearing 12 carried by the front face plate 4 of the motor casing 2. There is provided inside the side wall 3 of the motor casing 2 an annular support member 13 adapted to hold a plurality of magnetic pole sensors 14 so that these sensors 14 can be properly positioned closely adjacent to one end surface of the rotor 7.

In this brushless electromotor 20, the magnetic pole sensors 14 detect positions of the magnetic poles of the rotor 7 and, in reponse thereto, a control circuit (not shown) supplies the corresponding driving coils 6 with electric current so that an interaction of electric current and magnetic flux causes the rotor 7 to be rotated. As it has been rotated in this manner, the rotor 7 now presents new magnetic pole positions to be detected by the magnetic pole sensors 14 again and the control circuit supplies the another driving coils 6 with electric current, causing the rotor 7 to be rotated again. Such operation is repeated and thereby the rotor 7 is continuously rotated. The rotary force thus generated is taken out as a motive power from the electromotor via the rotatable shaft 8.

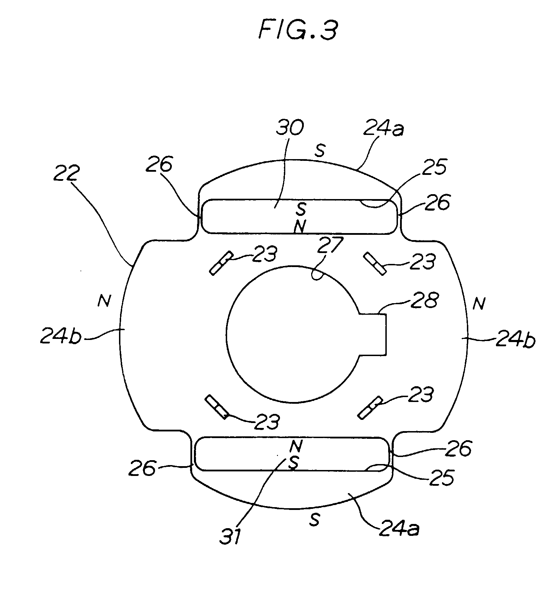

Fig. 2 shows the same rotor 7 as that incorporated in the brushless electromotor 20 of Fig. 1, and Fig. 3 shows a silicon steel sheet 22 constituting the rotor 7. A yoke 21 of the rotor 7 comprises a plurality of such silicon steel sheets 22 laminated one upon another in the axial direction of the rotatable shaft 8 and integrally joined by caulked rectangular recesses 23 of the respective sheets 22 forcibly engaged with each other.

Each silicon steel sheet 22 made of material having a high magnetic permeability has its surface coated with inorganic insulating film of a thickness of either 0.35 mm or 0.5 mm. As apparent from Fig. 3, the silicon steel sheet 22 has four magnetic poles 24a, 24b radially extending to their arcuate outer ends and successively spaced from one another by an angle of 90°. Of these magnetic poles, one pair of diametrically opposed magnetic poles 24a are provided symmetrically to the rotational axis with corresponding pair of slots 25 to accommodate respective permanent magnets 30 and 31. Since the pair of magnetic poles 24a are provided with the pair of slots 25, respectively, the outer end portion and the root portion of each magnetic pole 24a are connected to each other by narrow bridges 26 defined on laterally opposite ends of each lot 25. Each silicon steel sheet 22 is centrally provided with an opening 27 to accommodate the rotatable shaft 8 and this opening 27 is provided along part of its periphery with a keyway 28.

The rotatable shaft 8 is diameter-enlarged along its longitudinally intermediate portion and this diameter-enlarged portion is so configured to be snugly accommodated in the opening 27. After the silicon steel sheets 22 are integrally laminated to form the yoke 21, the rotatable shaft 8 is inserted into the opening 27. The diameter-enlarged intermediate portion of the rotatable shaft 8 is, in turn, having a key 29 adapted to be engaged with the keyway 28 so that the rotor 7 cannot be rotated apart from the rotatable shaft 8.

While the yoke 21 comprises the silicon steel sheets 22 integrally laminated in this embodiment, the silicon steel sheets 22 may be replaced by cold rolled steel sheets (SPCC) to form the yoke 21.

A pair of permanent magnets 30 and 31 are then inserted into the pair of slots 25 with their N-poles being diametrically opposed to each other. Since the N-poles of these permanent magnets 30 and 31 are opposed to each other and repel each other, the magnetic poles 24a are S-polarized while the magnetic poles 24b are N-polarized and thus the 4-pole rotor is provided.

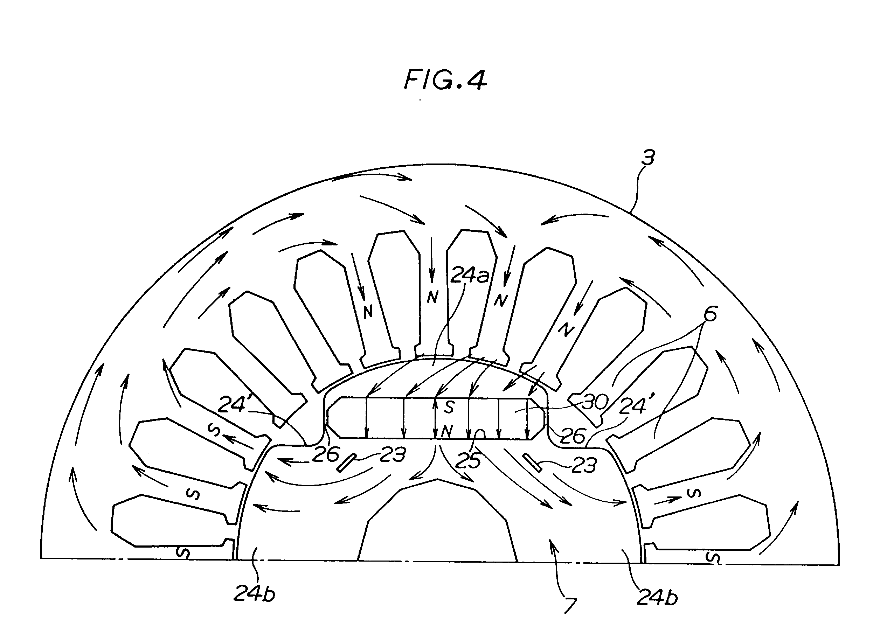

Fig. 4 shows a pattern of magnetic force lines generated by the rotor 7 incorporated into the electromotor. As shown, the lines of magnetic force exiting from the N-pole of the permanent magnet 30 pass through the bridges 26 toward the S-pole and a saturated magnetic flux density is readily reached because the respective widths of the bridges 26 are dimensioned sufficiently narrow. Between each pair of adjacent S-pole 24a and N-pole 24b there is a notch 24' and the lines of magnetic force produce paths which extend from the pole-face of the magnetic pole 24b through the inside of the driving coils 6, then through the pole-face of the magnetic pole 24a to the S-pole, as shown in Fig. 4, under the mutual repulsion of the diametrically opposed same poles of the permanent magnets 30, 31. The caulked portions 23 are rectangular and their longer sides are angled by 45° with respect to a direction in which the magnetism of the rotor 7 is oriented so as not to interfere with the lines of magnetic force.

According to this example, each silicon steel sheet is provided with a plurality of magnetic poles radially extending outwardly from the outer periphery of the sheet and these magnetic poles are alternately provided with slots to accommodate the respecitve permanent magnets so that the sides of these permanent magnets facing the rotatable shaft may have the same polarity. With such arrangement, mutual repulsion of the diametrically opposed magnetic poles provides the rotor having the magnetic poles of which number is twice the number of permanent magnets.

In addition, the permanent magnets are inserted into the respective slots, more-specifically, they are radially held in the highly permeable material and thereby accidental flying-off of the permanent magnets due to high r.p.m. rotation is avoided. Accordingly, the need for the member used to cover the outer periphery of the rotor in order to prevent the permanent magnets from flying off is eliminated and, in a consequence, an iron loss due to use of such member can be minimized. The iron loss can be further reliably reduced by forming the yoke from the laminated steel sheets.

Moreover, the permanet magnet according to this embodiment has a simple configuration and requires no high precision upon finishing the surface. This allows production of the permanent magnet to be drastically facilitated.

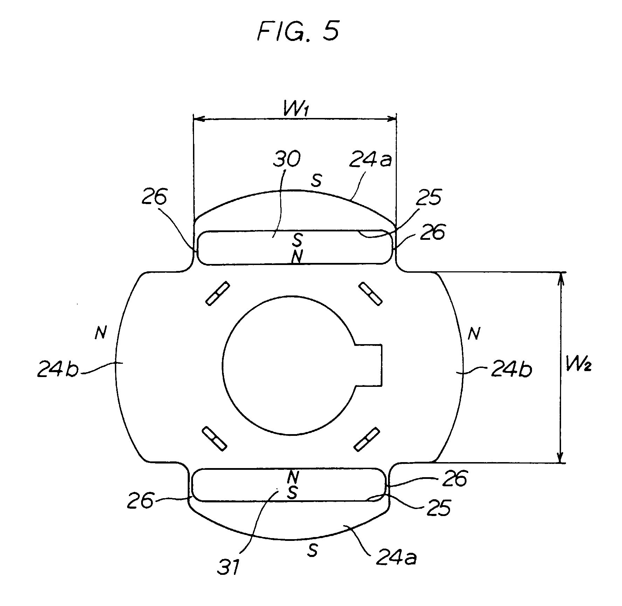

Then, the second example will be described in reference with Fig. 5.

Referring to Fig. 5, the lines of magnetic force exiting from the N-pole of the permanent magnet 30 partially return to the S-pole without passing through the pole-face of the magnetic pole 24b due to a so-called magnetic flux leakage and, therefore, a total amount of magnetic flux on the pole-face of the magnetic pole 24a will exceed that on the pole-face of the magnetic pole 24b if the pole-face of the magnetic pole 24a has a width W1 equal to a width W2 of the pole-face of the magnetic pole 24b. In view of this, the instant example dimensions the width W2 larger so that the total amounts of magnetic flux on the pole-faces of the magnetic poles 24a, 24b are equalized and thereby a torque generated can be in uniformity.

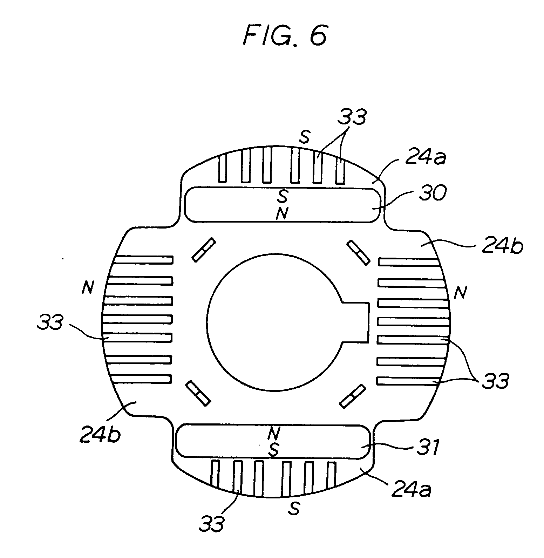

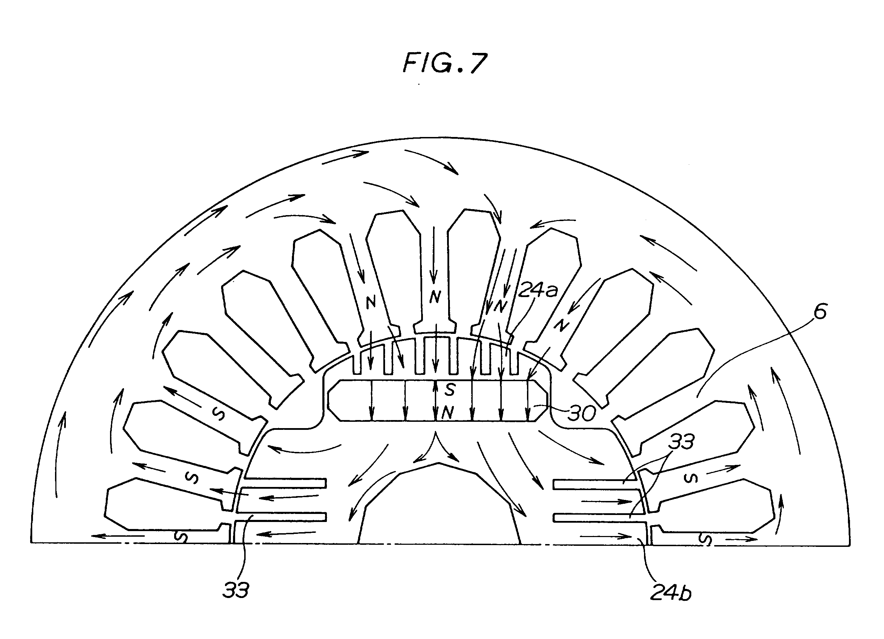

The third example will be explained with reference to Figs. 6 and 7.

In this example, as shown in Fig. 6, the magnetic poles 24a, 24b are provided with slits 33 oriented in conformity with directions of magnetism presented by the respective magnetic poles 24a, 24b. Generally, the lines of magnetic force exiting from the N-pole reach the S-pole along the shortes paths and accordingly a magnetic flux density occurring at opposite ends is higher than that occurring at the middle portion on the pole-face of the magnetic pole 24a, as compared with that of the embodiment of Fig. 4. To overcome such undesirable tendency, the instant example provides the magnetic pole with siad slits 33 and thereby the lines of magnetic force are forcibly guided to exit from or enter into the pole-face along the slits 33.

Fig. 7 shows a pattern described by the lines of magnetic force in this example. As shown, the lines of magnetic force exiting from the N-pole of the permanent magnet 30 are guided by the slits 33 of the magnetic pole 24b prior to passing through the driving coils 6, then guided by the slits 33 of the magnetic pole 24a and return to the S-pole of the permanent magnet 30. The lines of magnetic force are thus uniformly distributed by the slits 33 on the same pole-face and accordingly the torque thereby generated is also uniform. In this way, a thermal distribution in the permanent magnet rotor is improved and a cooling area is advantageously increased.

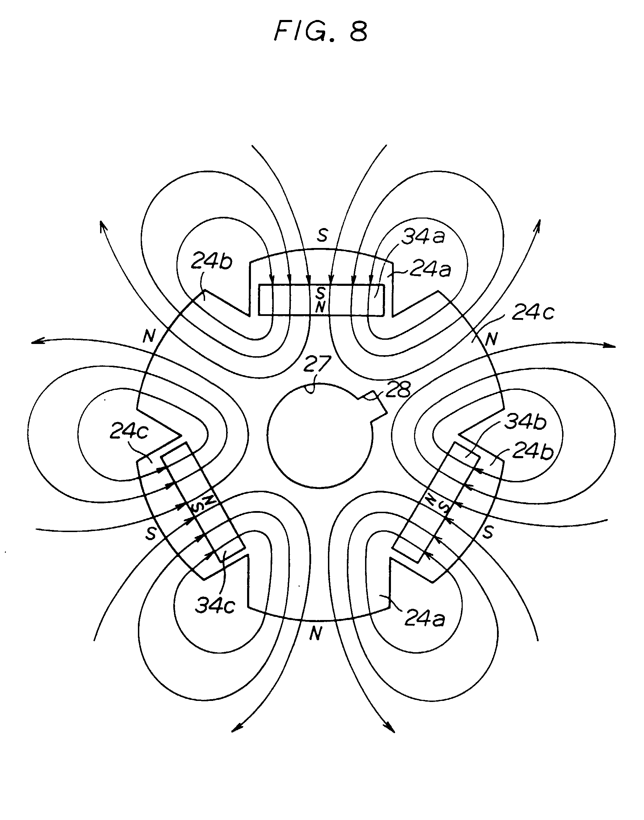

Now the fourth example will be described with reference to Fig. 8.

Referring to Fig. 8, a 6-pole rotor 7 is shown in a sectional view. In this example the respective magnetic poles 24a, 24b, 24c radially projecting outwardly are angularly spaced from one another by 60° and these magnetic poles are alternately provided with permanent magnets 34a, 34b, 34c inserted thereinto so that the N-poles of these magnets face inwardly. The yoke 21 is centrally provided with the opening 27 to accommodate the rotatable shaft and the opening 27 is provided with the keyway 28 to prevent the rotatable shaft from being rotated to the rotor.

The respective permanent magnets 34a, 34b, 34c are arranged with their N-poles facing inwardly in this example and, therefore, the lines of magnetic force exiting from the respective N-poles are repelled by the N-poles of the other permanent magnets and enter through the adjacent pole-faces into the respective S-poles, as shown. In this manner, the magnetic poles containing the associated permanent magnets are S-polarized while the magnetic poles containing no permanent magnet are N-polarized.

While this example employs the permanent magnets made of cast praseodymium (Pr) alloy, it is possible to employ the permanent magnets made of any type selected from a group consisting of cast type (e.g. alnico or the praseodymium magnet), sintered type (e.g. ferrite or rare earth magnet) and resin bound type (e.g. ferrite or rare earth magnet).

As for the permanent magnets of this example, each comprises a rolled plate with a dimension as measured axially of the rotor being 2 to 5 times a dimension as measured circumferentially of the rotor and having a rectangular cross-section. Such feature facilitates manufacturing process of the permanent magnets in comparison with the conventional tile-shaped permanent magnets. In addition, the need for precision upon finishing the surface can be eliminated, since the permanent magnets of the invention are not bonded to the outer peripheral surface of the yoke. Moreover, the permanent magnets of the invention never centrifugally fly off, since they are snugly accommodated in the associated slots 25 and held radially in the highly permeable material. Thus, the permanent magnets of the invention are useful for the electromotor of high r.p.m.

As for the silicon steel sheets 22 together forming the yoke 21, each can be formed merely by press forming process and thereby not only a high productivity is achieved but also the rotor of an accurate outer dimension can be obtained, thus allowing an efficient electromotor to be realized.

Next, the fifth example will be described.

In this example, the bridges 26 include grooves to limit passage of the magnetic flux.

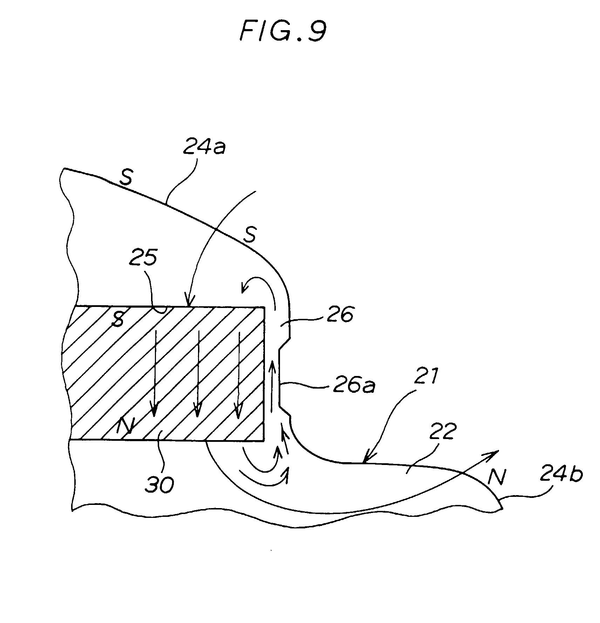

Referring to Fig. 9 which partially shows the magnetic pole 24a in an enlarged scale, a part of the magnetic flux exiting from the N-pole of the permanent magnet 30 passes through the bridge 26 to the S-pole of this permanent magnet 30 as shown in the Figure. This part of magnetic flux passing through the bridge 26 never passes through the space external to the yoke 21 and, therefore, never intersects the stator of the electromotor. Consequently, no force for rotational driving of the rotor is generated. By minimizing the amount of magnetic flux passing through the bridge 26, the magnetic force of the permanent magnet 30 can be utilized more efficiently.

The part of magnetic flux Φ passing through the bridge 26 can be calculated according to the following equation:$\text{Φ = B X S}$ where S indicates the sectional area of the bridge 26 and B indicates the magnetic flux density of the silicon steel sheet 22.

It is obvious from this equation that the sectional area S of the bridge 26 may be reduced to minimize the amount of magnetic flux passing through the bridge 26.

In this example, each bridge 26 is provided with a flux limiting groove 26a. Formation of such groove 26a correspondingly reduces the sectional area of the bridge 26 and thereby limits the amount of magnetic flux passing through this bridge 26.

Provision of the above-mentioned flux limiting grooves 26a in the respective bridges 26, 26 allows the amount of magnetic flux passing through the bridges 26, 26 to be effectively limited so that the magnetic force of the permanent magnets can be efficiently utilized and thus the permanent magnet rotor fo a higher efficiency can be obtained.

Formation of the flux limiting grooves 26a is conducted by successive steps of stamping out the individual silicon steel sheets 22, laminating them to form the yoke 21 and finally providing the yoke 21 by use of suitable tools such as a grinder with the desired grooves 26a and 26a. The manufacturing process of the grooves 26a, 26a is easier than the stamping of the silicon stelle sheets 22 so far as the accuracy of dimension control is concernd, and therefore it is possible to provide the respective bridges 26, 26 with minimized section areas, respectively. Accordingly, the permanent magnet rotor is advantageous in comparision with the conventional permanent magnet rotor having no grooves formed in the respective bridges because of the facilitated production and the bridges having the significantly reduced sectional areas.

The sixth example will be now explained.

In this embodiment, each of the bridges 26 is provided only on the front side of the associated slot 25 as viewed in the direction of the rotation.

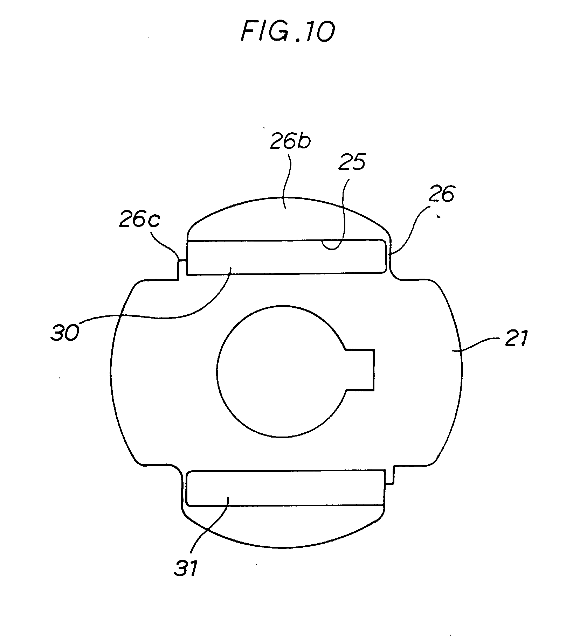

As apparent from Fig. 10, the respective slots 25 are of half-closed type. More specifically, the bridges 26 respectively connecting the respective magnetic pole pieces 26b to roots of the respective magnetic poles are of cantilever type and configured point-symmetrically with respect to the rotational axis so as to have the respective bridges 26 on the front sides but no bridges on the rear sides in the rotational direction.

The permanent magnets 30 and 31 are inserted in the axial direction into the respective slots 25 of the yoke 21 comprising the silicon steel sheets laminated together. As shown in Fig. 10, the silicon steel sheets are provided on the sides having no bridges with stoppers 26c to prevent the respective permanent magnets 30 and 31 inserted into the associated slots from flying off during rotation of the rotor at high r.p.m.

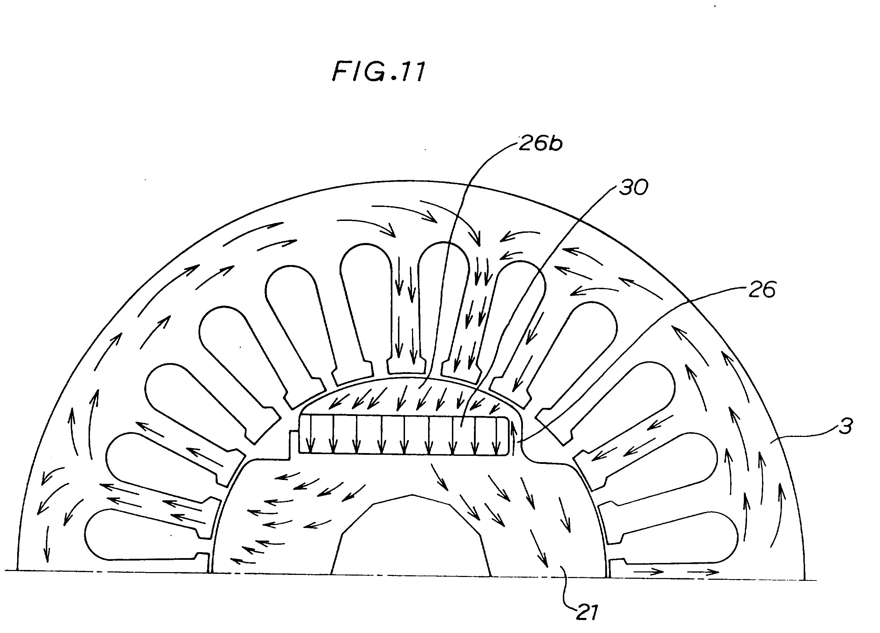

Fig. 11 shows a pattern of magnetic flux occurring under a load torque on the basis of field analysis. A width of the bridge 26 corresponds to a width of leakage flux and a thickness of the permanent magnet 30 corresponds to a thickness of the leakage flux occurring at both ends.

In this manner, as shown in Fig. 11, the leakage flux flows through the bridge 26 and the flux is saturated in the bridge as well as in the portion of the magnetic pole piece extending adjacent to the bridge.

Consequently, even under the load current, the magnetic flux exiting from the permanent magnets 30 and 31 is not readily deflected by the magnetic pole piece 26a and, accordingly, the circumferential center of the magnetic pole is not readily moved under the load. Such condition is convenient for introduction of so-called sensorless technique. The left half portion of each magnetic pole piece with respect to the center thereof generates a larger amount of magnetic flux, since no leakage flux occurs on the side having no bridge, and, as a result, the leakage flux occurring along the bridge will not significantly reduce the total amount of magnetic flux.

Now the seventh example will be described.

In this example, laterally opposite ends 30a and 31a of the respective permanent magnets 30 and 31 facing the bridge 26 as well as axially opposite ends 30b and 31b of these permanent magnets are covered with a nonmagnetic material.

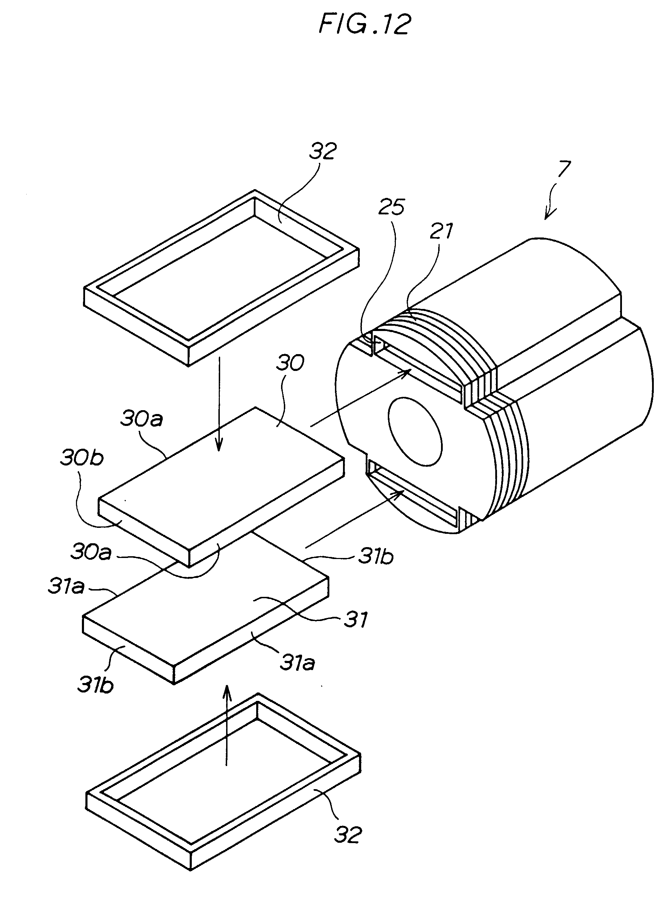

Referring to Fig. 12, there are provided spacers 32 made of aluminum or a nonmagnetic material such as stainless steel in the form of frames adapted to cover the laterally opposite ends and the axially opposite ends of the respective permanent magnets 30 and 31. Each frame is designed to accommodate the associated magnet snugly and has a height slightly less than a thickness of the magnet so that the magnet is not protruded over the frame too much (when accommodated).

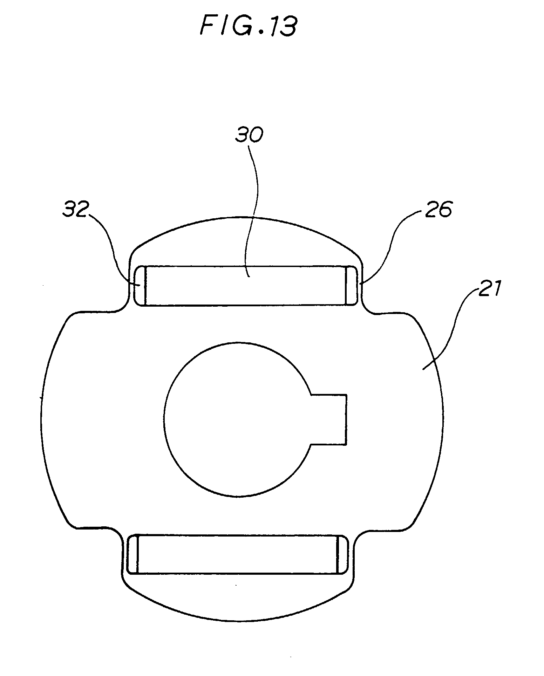

Assembling is performed by inserting the permanent magnets 30 and 31 into the associated spacers 32 in the magnetizing direction followed by inserting the respective subassemblies into the slots 25 of the yoke 21, to obtain a configuration shown in the sectional view of Fig. 13.

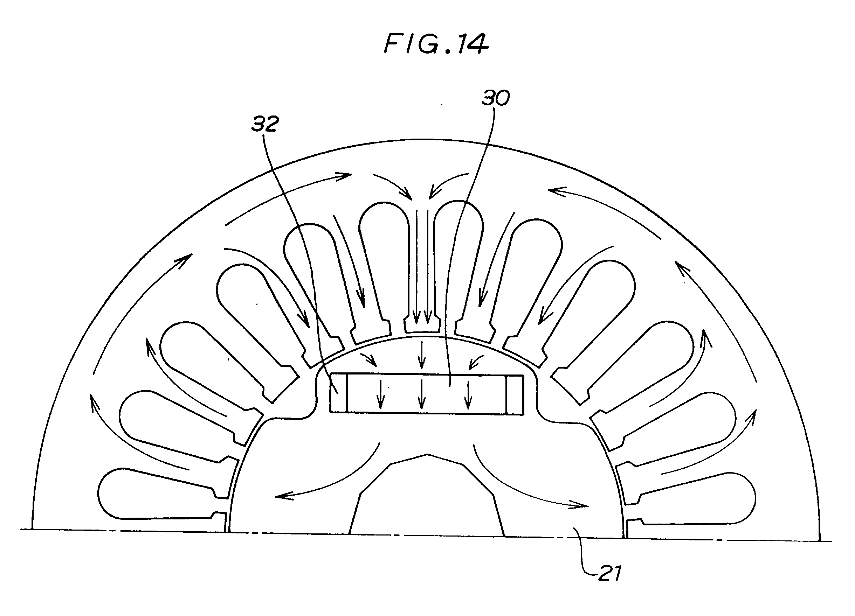

Fig. 14 shows a flow of magnetic flux observed after the assembly is incorporated into the magnetic circuit. As apparent from Fig. 14, the nonmagnetic spacers 32 provided on the laterally opposite ends of the permanent magnet 30 serves to obstruct a flow of magnetic flux and thereby to assure that the magnetic flux exists from the magnet substantially without leakage. In this manner, the leakage flux can be reduced and the effective gap flux can be maintained.

Additionally, the height of each spacer is designed to be slightly larger than the thickness of the permanent magnet accommodated therein and this dimensioning is advantageous in that, when the magnet is inserted together with the associated spacer into the slot of the yoke, the magnet is never in contact with the slot of the yoke. As a result, a fear that the magnet surface might be damaged and rusted can be eliminated.

Next, the eight example will be described.

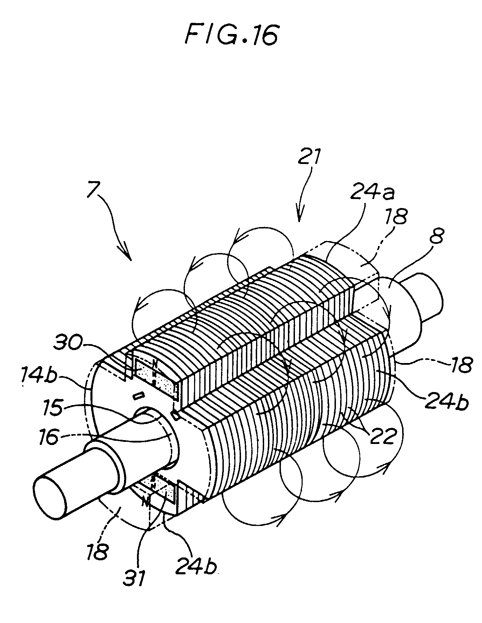

As apparent from Fig. 16, this example is characterized by an arrangement such that the yoke 21 has an opening 15 axially extending therethrough to accommodate the rotatable shaft 8, the opening 15 having a diameter larger than the outer diameter of the rotatable shaft 8, and the rotatable shaft 8 is accommodated by the opening 15 substantially in concentric relationship with a flux-leakage-proof member 16 interposed between the outer peripheral surface of the rotatable shaft 8 and the inner wall of the opening 15 so that the yoke 21 may be integrally bonded to the rotatable shaft 8 with interposition of this flux-leakage-proof member 16.

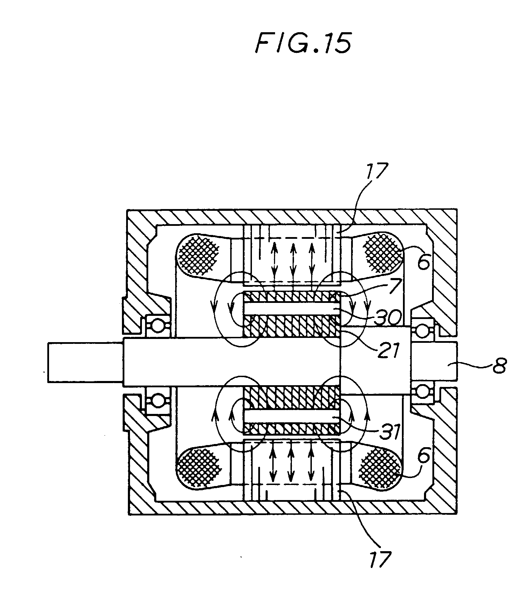

More specifically, as apparent from Fig. 15, the magnetic flux developed in the rotor 7 of the brushless electromotor as recited in claim 1 passes through the space external to the rotor 7 under the inter-pole repulsion effect of the permanent magnets 30 and 31 and then intersects a stator core 17. Magnetic poles of this stator core 17 generates a magnetic field adapted to be rotated under the effect of current flowing through the driving coils 6. The permanent magnet rotor 7 is rotationally driven by the rotating field generated by the magnetic poles of the stator core 17.

The permanent magnet rotor 7 has the opening centrally extending through the yoke 21 and having the inner diameter substantially corresponding to the outer diameter of the rotatable shaft 8 to accommodate the rotatable shaft 8. To assemble the permanent magnet rotor 7, the yoke 21 is heated so as to thermally expand the opening 15 and the rotatable'shaft 8 is forced thereinto. Then the yoke 21 may be cooled to bring the inner wall of the opening to close contact with the outer peripheral surface of the rotatable shaft 8 and thereby to bond the rotatable shaft 8 integrally to the yoke 21.

In assembling the permanent magnet rotor having balance weights on axially opposite end surfaces of the yoke 21, these balance weights are manufactured in a separate process and thereafter the rotatable shaft is forced into the opening extending through the balance weights and the yoke.

With the previously mentioned example of permanent magnet for brushless electromotor, there is a fear that the magnetic flux may partially pass through the inside of the rotatable shaft and then leak externally of the axially opposite end surfaces of the permanent magnet rotor. Partial leakage of the magnetic flux will prevent the magnetic flux from intersecting the stator core and, in consequence, the magnetic force of the permanent magnets will not effectively contricute to rotation of the electromotor, deteriorating the efficiency of the brushless electromotor.

Accordingly, it is an object of this eighth example to provide a permanent magnet rotor for brushless electromotor so improved that the flux leakage otherwise often occurring outwardly from the axially opposite end surfaces of the rotor may be sustantially avoided and manufacturing the permanent magnet rotor may be facilitated.

As shown in Fig. 16, the permanent magnet rotor 7 comprises the central opening 15 axially extending therethrough to accommodate the rotatable shaft 8, the flux-leakage-proof member 16 made of aluminum die cast material between the yoke 21 and the rotatable shaft 8, and the balance weights 18 made of aluminum die cast material on the axially opposite end surfaces of the yoke 21. The aluminum die cast material has a flux shielding property by which the magnetic flux is prevented from passing through both the member 16 and the balance weights 18. Consequently, the magnetic flux passing through the rotatable shaft 8 toward the axially opposite ends is shielded by the flux-leakage-proof member 16 and the balance weights 18 and cannot exit outwardly from the axially opposite end surfaces of the yoke 21.

When such permanent magnet rotor 7 is used for the brushless electromotor, all the magnetic flux lines pass through on the faces perpendicular to the rotatable shaft 8 and effectively intersect the stator core 17. Upon current supply to the-driving coils 6, a rotating field is generated in the magnetic poles of the stator core 17 so that the permanent magnet rotor is rotationally driven by interaction between the rotating field generated in the stator core and the magnetic flux in the permanent magnet rotor. Accordingly, the greater the amount of magnetic flux intersecting the stator core is, the larger the torque is. With this specific embodiment of permanent magnet rotor 7, the magnetic flux thereof can be effectively converted to the rotating force, since all the magnetic flux generated by the permanent magnets 30 and 31 intersects the stator core 17 without exiting externally from the axially opposite end surfaces of the yoke 21.

Furthermore, this example of permanent magnet rotor 7 comprises the rotatable shaft 8 loosely inserted into the opening 15 axially extending therethrough, the flux-leakage-proof member 16 and the balance weights 18, wherein the components 16 and 18 are integrally molded from aluminum die cast material. Such unique arrangement advantageously makes it possible to eliminate not only a separate process of manufacturing the balance weights but also a process of assembling these balance weights together with the yoke into the permanent magnet rotor, and thereby facilitates manufacturing of the permanent magnet rotor 7.

Although this example has been described as including the balance weights, even when the permanent magnet rotor is provided only with the flux-leakage-proof member, the magnetic flux is effectively prevented from passing through the rotating shaft so as to improve the efficiency of the electromotor.

Moreover, the flux-leakage-proof member is not limited to that made of aluminum die cast material and a similar effect can be achieved even when the member is made of the other material having a lower magnetic permeability, for example resin.

Now the first embodiment of the invention will be described.

This embodiment is characterized by a unique arrangement that the inner peripheral surface of the yoke 21 defining the slot 25 is provided with projections adapted to be engaged with the associated permament magnet 30 and 31 forced into this slot.

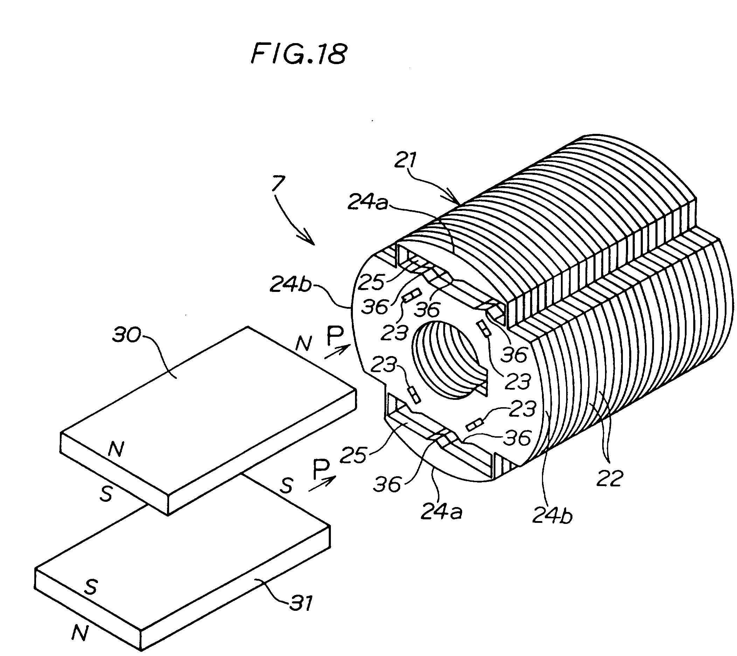

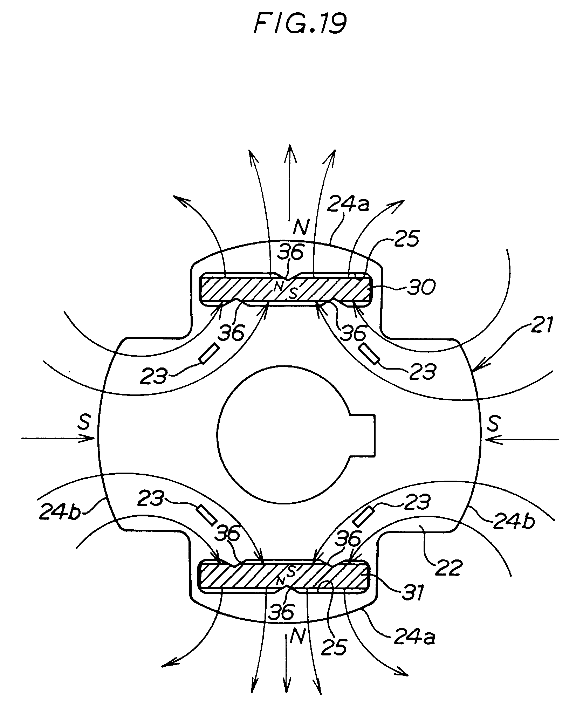

As apparent from Figs. 18 and 19, the inner peripheries of the silicon steel sheets 22 defining the slots 25, 25 are provided with a plurality of edges 36 each defined by two sides of a triangle projecting inwardly of the slot 25.

The permanent magnets 30 and 31 come into engagement with tips of the respective edges 36 as they are forced into the respective slots 25, and are thereby held within the respective slots 25. By means of the edges 36, the permanent magnets are not in surface contact with the inner peripheral surface of the respective slots 25. Accordingly, the permanent magnets 30 and 31 can be forced into the respective slots 25 with a small force without significant frictional resistance.

After forced into the respective slots, the outer surfaces of the permanent magnets are firmly engaged with the tips of the respective edges as shown in the drawings, and the permanent magnets are reliably prevented from dropping off. In this embodiment of permanent magnet rotor 7, no adhesive is used to hold the permanent magnets 30 and 31 within the respective slots 25 and, therefore, there is no fear that the permanent magnets might drop off due to dissolution of adhesive in refrigerant or pressuzired fluid when the electromotor is used in such refrigerant or pressurized fluid.

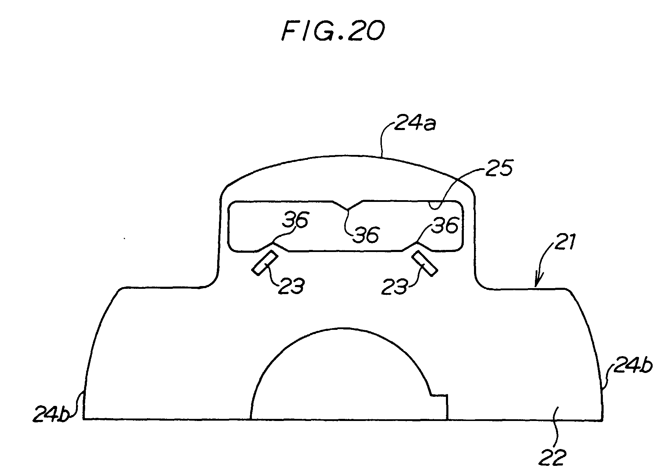

As shown in Fig. 20, the caulked recesses 23 used to laminate the silicon steel sheets 22 together are provided adjacent to the inner peripheries of the silicon steel sheets 22 defining the respective slots 25. The caulked recesses 23 are formed by partially caulking the silicon steel sheets by means of metal mold pressing. Formation of these caulked recesses adjacent to the inner peripheries allows this peripheral edge to be deformed by a pressure of the metal mold so as to form edges 36 projecting inwardly from the respective slots 25. In this way, the process required for formation of the projecting edges 36 is partially eliminated, allowing manufacturing the permanent magnet rotor 7 to be facilitated.

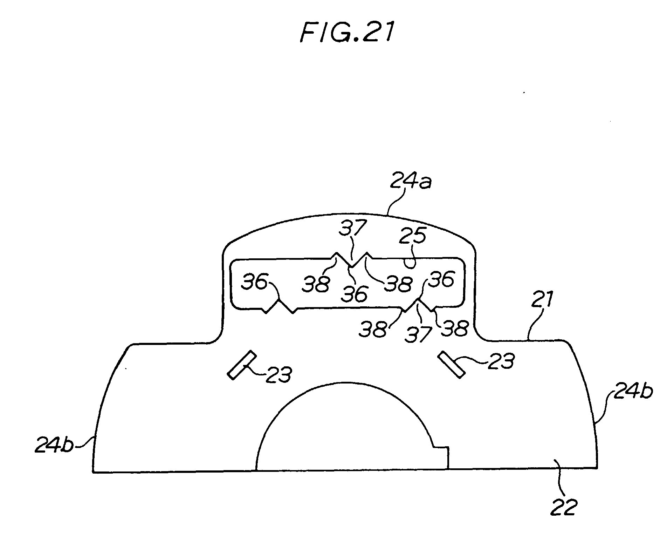

Fig. 21 partially shows the yoke in a variant of this embodiment.

In this variant, each of the edges 36 formed in the silicon steel sheets 22 comprises a triangular projection 37 arranged to be engaged with the permanent magnet (not shown) and notches 38 formed on both ends of the base of the triangular projection 37. The base of the triangular projection 37 is located in the inner periphery of the silicon steel sheets 22 defining the slot 25 and in the yoke 21. The triangular projection 37 is connected to the inner periphery of the silicon steel sheets defining the slot by the notches 38.

To firmly engage the permanent magnet, the triangular projection of each edge must have a vertical angle smaller than a predetermined degrees and a predetermined height. Excessively large vertical angle of the triangular projection will require a correspondingly large force to insert the permanent magnet into the slot. If the edge does not have the predetermined height, the edge will be deformed as the permanent magnet is forced into the slot and will not function as expected. However, providing the inner periphery of the silicon steel sheets defining the slot with the edge having the desired vertical angle and height may reduce the cross section of the permanent magnet which can be forced into the associated slot or enlarge the slot. This is contradictory to the demand for compactness and high efficiency of the brushless electromotor.

The edge 36 in this specific embodiment comprises, as above-mentioned, the triangular projection 37 and the pair of notches 38. Such arrangement not only facilitates insertion of the permanent magnet without enlarging the slot 25 or reducing the sectional area of the permament magnet but also prevents the permament magnet from accidentally dropping off by effective engagement with the permanent magnet after the latter is forced into the slot.

Though the present embodiment has been explained as including the triangular projection adapted to be engaged with the permanent magnet, the shape of the projection is not limited to the triangle and, for example, the projection having a small radius semi-circular tip may also be used.

Furthermore, the yoke is not limited to that consisting of the laminated silicon steel sheets and, for example, the yoke may also be of integral metallic block having the slot into which the permanent magnet is forced and the projections formed on the inner wall of the slot adapted to be engaged with the permanent magnet.

Next, the ninth example will be described.

This specific example is characterized by an arrangement such that after the permanent magnets 30 and 31, which are shorter than the axial length of the yoke 21, are inserted into the respective slots 25, resultant cavities defined within the respective slots are filled with suitable putty material having weights selected depending on a gravity center displacement of the object to be rotationally driven and the balance weights 39 are formed as the putty material is cured.

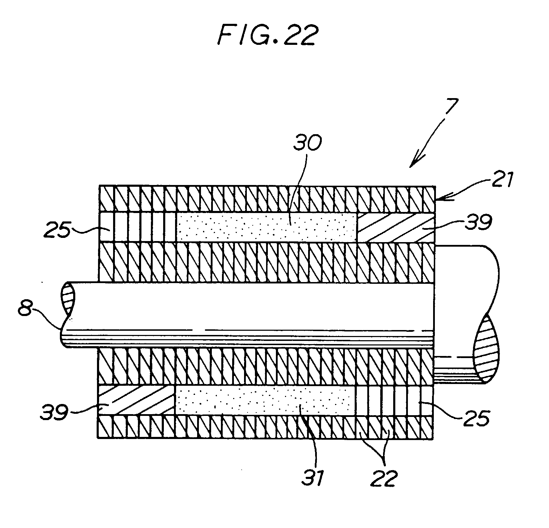

Fig. 22 shows the permanent magnet rotor 7 provided with the balance weights formed in the above-mentioned manner and, in this permanent magnet rotor 7, the respective permanent magnets 30 and 31 are shorter than the axial length of the yoke 21 so as to define the cavities within the respective slots 25. As shown in the Figure, these cavities are filled with the putty material composed of fine metallic powder mixed with resin and this putty material is cured to form the respective balance weights 39.

The yoke 21 of permanent magnet rotor 7 contains these balance weights 39 and 39 on the sides of the respective permanent magnets 30 and 31 which are axially opposed to each other and, therefore, the gravity center of the yoke 21 is displaced toward the axially opposite ends of the yoke 21. Consequently, a vibration mode tuning which would otherwise occur in a total system comprising the rotatable shaft and the eccentric rotor can be avoided and vibrations of the eccentric rotor due to its rotation can be absorbed.

Referring to Fig. 22, the balance weights 39 and 39 are weight-adjusted so as to fulfill such purpose. More specifically, a ratio of metallic powder to resin is so selected that tha blanace weights 39 and 39 may compensate the vibration mode tuning possibly occurring in the total system comprising the rotatable shaft and the eccentric rotor, with the respective cavities in the slots 25 being filled with the putty material mixed at this ratio. Alternatively, the amount of putty material is adjusted for each balance weight 39 and the respective cavities are filled with different amounts of putty material which defines the balance weight 39. It should be understood that the putty material is not limited to the mixture of metallic powder and resin, but aluminum die cast material may also be used.

As described above, the balance weights for this example of the permanent magnet rotor are formed within the yoke and have no portions projecting outwardly from the axially opposite ends of the yoke. Therefore, the balance weights encounter no fluid resistance during rotation. Additionally, there is no fear that the balance weights might fly off under a centrifugal force due to rotation of the permanent magnets since the balance weights are provided within the yoke. This makes it possible to obtain the permanent magnet rotor which is excellent in the rotational drive efficiency and free from the fear, that the balance weights might accidentally fly off during operation.

Finally, the tenth example will be described.

This specific example is characterized in that the rotor contains therein a cooling mechanism.

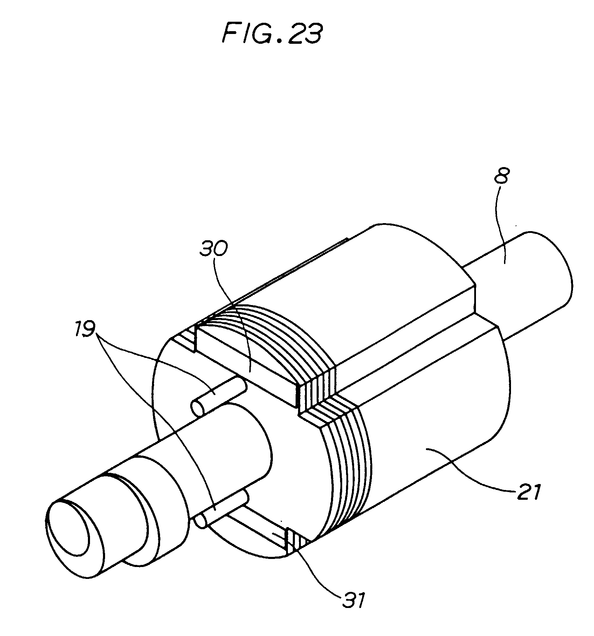

Referring to Fig. 23, a pair of heat pipes 19, 19 are embedded in the yoke 21 to be adjacent to the respective permanent magnets 30 and 31, and these heat pipes 19, 19 are filled with operating fluid by which a heat exchange occurs. More specifically, a heat absorbing section of each heat pipe 19 lying within the yoke 21 absorbs internal heat of the yoke and a radiating section projecting outwardly from the yoke radiates the internal heat. The operating fluid cooled by heat exchange with atmosphere retursn to the heat absorbing section of the heat pipe 19. In this manner, the heat pipes 19, 19 continuously radiate the internal heat of the permanent magnets as well as the yoke to the outside, cooling the permanent magnet rotor.

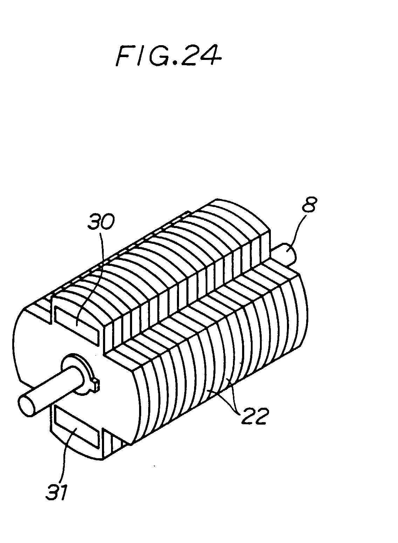

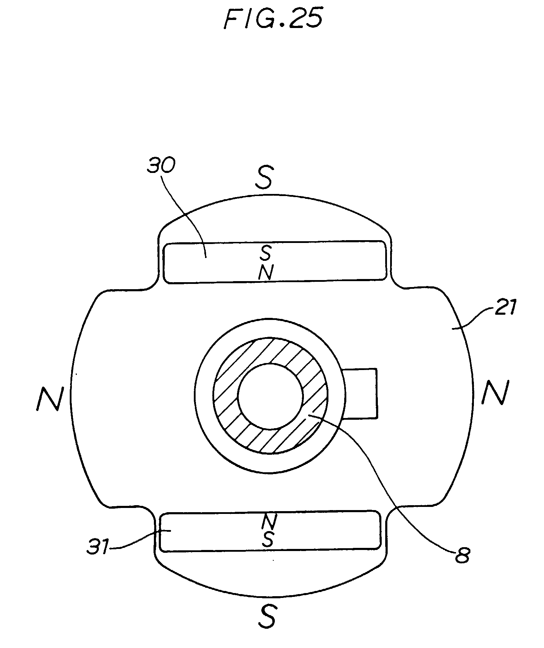

Referring to Figs. 24 and 25, there is illustrated a variant of this example, in which the rotatable shaft 8 serves also as the heat pipe. Such arrangement provides the permanent magnet rotor which is fully closed and able to radiate the internal heat to the outside. It should be understood that such arrangement can utilize sintered alloy, massive iron or cold rolled steel (SPCC) for the yoke.

Now a method for making the rotor according to the disclosed examples and embodiment of the invention will be described in detail.

As apparent from the above description, the permanent magnet rotor is manufactured by the method generally comprising steps of forming the yoke provided with the slots adapted to accommodate the respective permanent magnets, forming the permanent magnets each configured to match the respective slots of the yoke, and forcing these permanent magnets into the respective slots of the yoke.

More specifically, the yoke 21 and the permanent magnets 30 and 31 are separately manufactured, then these permanent magnets thus manufactured are inserted into the yoke to form the permanent magnet rotor 7. The yoke 21 is formed by laminating a plurality of silicon steel sheets 22 together and each silicon steel sheet 22 is configured b stamping out to have the magnetic poles 24, 24a, 24b, 24c along the outer periphery and the openings inside the magnetic poles through which the respective permanent magnets extend. In addition, each silicon steel sheet 22 is provided with the rectangular caulked recesses 23 formed by pressing with the metal die.

The caulked recesses 23 of the respective silicon steel sheets 22 may be forced one into another to laminate the silicon steel sheets integrally and thereby to form the yoke 21. The openings of the respective silicon steel sheets 22 are aligned with one another to form together the respective slots 25 to accommodate the associated permanent magnets 30 and 31.

The permanent magnets are manufactured by a method generally comprising steps of mixing powder of suitable magnetic material with epoxy binder, pouring this mixture into a mold and molding the mixture in a magnetic field into a given configuratin; curing this molded mixture by heat treatment; and surface-cutting this molded and cured mixture to be conformed to the slot 25 of the yoke 21.

The permanent magnets obtained in the above-mentioned manner are forced into the respective slots 25 of the yoke 21 to complete the permanent magnet rotor 7.

Next, another method of producing the permanent magnets for the brushless electromotor will be described, which is devised particularly to facilitate manufacturing of the permanent magnet rotor containing therein the permanent magnets of a relatively complicated shape without damaging the permanent magnets during when assembling.

This alternative method comprises steps of providing the slots extending through the yoke, filling the slots with powder of suitable magnetic material mixed with epoxy binder, compression-molding this mixture in a magnetic field applied in radial direction in relation to the rotatable shaft of the rotor and curing the compression-molded mixture with the heat treatment to form the permanent magnets directly within the slots of the yoke.

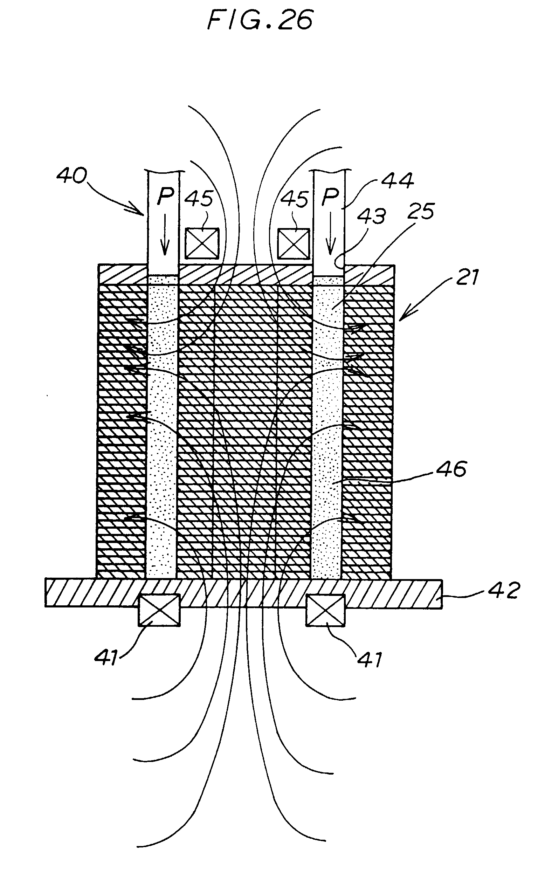

Fig. 26 illustrates the process of forming the permanent magnets within the slots. As shown, the yoke 21 is placed on a pedestal 42 having coils 41. On the top of the yoke 21, there are placed jigs 40 provided with openings 43 each having the same configuration as that of the slot 25 and compressing pistons 44. Each jig 40 is additionally provided with a coil 45. The slots 25 of the yoke 21 is filled with a raw material 46 of the permanent magnets composed of the magnetic powder mixed with the epoxy binder. In view of the fact that the raw material 46 of the permanent magnets has its volume reduced as it is compressed, each slot is filled with an amount of the raw material larger than the volume of the slot so that the raw material 46 is partially pressed into the opening 43 of the jig 40.

Electric current is applied to the coils 41, 45 to generate magnetic flux extending, as shown, through the center of the yoke 21, then through the respective slots from the inside toward the outside and to thereby provide a magnetic filed intersecting the raw material 46 of the permanent magnets filling the respective slots 25. Next, the compressing pistons 44 are forcibly moved as by, for example, oil pressure in a direction indicated by P in Fig. 26 and thereby the raw material 46 is compression-molded into the permanent magnets.

After the compression-molding, the yoke 21 is removed from the jigs 40 and the pedestal 42, and subjected to the heat treatment at a temperature of 100°C to 150°C to harden the permanent magnets contained therein.

In this way, the permanent magnets are formed within the respective slots 25 of the rotor 7, as shown in Fig. 4 and other Figures. These permanent magnets have their inner sides magnetized as S-poles and their outer sides as N-poles under the effect of the magnetic field applied during the compression-molding. The permanent magnets 30 and 31 are placed with their magnetic pole surfaces having the same polarity being opposed to each other so that their mutual repulsion causes the magnetic flux to extend from the magnetic pole 24a to the magnetic pole 24b of the yoke 21, as illustrated. This magnetic flux intersects the stator (not shown) of the electromotor provided in the proximity of the outer periphery of the yoke and interaction between the magnetic flux and the stator causes the permanent magnet rotor 7 to be rotationally driven.

As mentioned above, this method for producing the permanent magnet rotor allows the permanent magnets to be easily manufactured without damaging the magnets as they are forced into the respective slots of the yoke, because the permanent magnets are formed directly within the yoke. Furthermore, this unique method allows the permanent magnets of a relatively complicated shape to be formed within the yoke and such feature presents a significant effect particularly for so-called skewed permanent magnet rotor in which the yoke has the magnetic poles gradually displaced along the axial direction of the permanent magnet rotor.

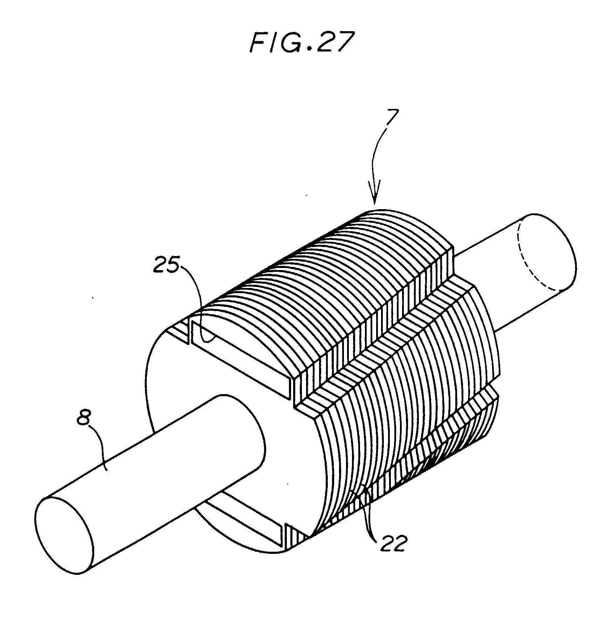

Referring to Fig. 27, the skewed permanent magnet rotor 7 is obtained by laminating a plurality of silicon steel sheets 22 with the individual silicon sheets being successively displaced by a small angle around the rotatable shaft 8. The respective slots 25 defined in such permanent magnet rotor 7 provide helical curves. Even within the slots 25 of such complicated shape, the permanent magnets 30 and 31 can be directly formed by the same method as described above in reference with Fig. 26.

Although the method described above particularly for the permanent magnet rotor is one in which the yoke contains therein a pair of permanent magnets and is provided along the outer periphery with four magnetic poles alternately magnetized in N- and S-Polarities by mutual repulsion of the pair of permanent magnets, the method is not limited to production of such permanent magnet rotor having the constitution as mentioned above. Namely, the method may be utilized to form the permanent magnets directly within the yoke also in the permanent magnet rotor having along the outer periphery an optional number of magnetic poles or even in the permanent magnet rotor having the permanent magnets provided in association with the respective magnetic poles.

Although the method has been described above on the assumption that each permanent magnet has the rectangular cross-section, the permanent magnet may have any cross-sectional shape.

The method described above allows the permanent magnet of high efficiency to be easily obtained without the need for surface-cutting of the permanent magnets during the manufacturing process. In addition, the method allows the permanent magnets to be efficiently used because there is no fear that the permanent magnets might be damaged during the manufacturing process.

The method can be employed for the slots of relatively complicated configurations, since the permanent magnets are formed directly within the respective slots of the yoke. The method not only allows the permanent magnets of relatively complicated cross-sectional shapes to be easily formed but also allows even the permanent magnet rotor having the curved slots be to be easily manufactured.

As apparent from the above description, the permanent magnet rotor provides the brushless electromotor of a simplified structure but still having high efficiency and suitable for high r.p.m. operation.

## Claims

1. A rotor for a brushless motor, comprising a yoke (21) formed from a plurality of silicon steel sheets (22) laminated together and along its outer periphery with an even number of magnetic poles (24a, 24b), slots (25) provided in the magnetic poles to accommodate permanent magnets, and permanent magnets (30, 31) accommodated respectively in the slots (25), characterised in that
the inner periphery of the yoke defining each slot (25) is provided with projections (36) adapted to be engaged with the respective permanent magnet (30, 31) as the latter is forced into the slot.

2. A rotor according to claim 1, wherein a plurality of silicon steel sheets (22) have caulked recesses (23) adapted to be successively engaged with one another to achieve an integral lamination of these silicon steel sheets (22) and wherein the projections (36) are defined by the inner peripheries of the silicon steel sheets deformed as the caulked recesses are formed in the proximity of the slot.

3. A rotor according to claim 1 or 2, wherein each of the projections (36) has a triangular projection adapted to engage with the permanent magnet (30, 31), a base of the triangle defining the projection lying nearer to the axis of the yoke (21) than to the inner periphery of the yoke defining the slot (25), and circumferentially opposite sides of the triangular projection (36) are connected to the inner periphery of the yoke (21) defining the slot (25) by notches (38) formed at both ends of the base to obtain a desired height of the triangular projection (36).

4. A rotor according to any preceding claim, wherein the magnetic pole surfaces of the magnetic poles (24a) having therein the inserted magnets (30, 31) respectively have width (W1) smaller than those of the magnetic poles (24b) having no permanent magnets (W2).

5. A rotor according to any preceding claim, wherein slits (33) are provided on said magnetic poles with said permanent magnets (30, 31) and disposed outside said permanent magnets and oriented in conformity with direction of magnetism and on said magnetic poles with no permanent magnets for guiding magnetic flux to obtain a uniform distribution of magnetic flux on each magnet.

6. A rotor according to any preceding claim, wherein bridges (26) are provided at opposite ends of each slot (25) so as to connect an outermost end to a base of the magnetic pole associated with this slot (25), the bridges (26) having a sufficiently narrow width to assure that a density of the magnetic flux passing through these bridges (26) is saturated.

7. A rotor according to any one of claims 1 to 5, wherein bridges (26) are provided at opposite ends of each slot (25) so as to connect an outermost end to a base of the magnetic pole associated with this slot (25), and the bridges (26) are respectively formed with grooves (26a) adapted to limit passage of the magnetic flux.

8. A rotor according to any preceding claim, wherein a single bridge (26) is provided at one side of each slot (25) to connect an outermost end to a base of the magnetic pole associated with this slot, and said bridge is present in the direction of rotation.

9. A rotor according to claim 8, wherein the width of the bridge (26) is so selected as to allow a leakage flux to flow therethrough and a thickness of the permanent magnet (30, 31) is selected to generate a leakage flux at axially opposite ends thereof.

10. A rotor according to any preceding claim, wherein bridges (26) are provided in each slot (25) to connect an outermost end to a base of the magnetic pole associated with this slot, and the ends (30a, 31a) of the permanent magnet (30, 31) facing the bridge and axially opposite ends (30b, 31b) of the permanent magnet are covered with nonmagnetic material (32).

11. A rotor according to any preceding claim, wherein the yoke has an opening (15) axially extending therethrough to accommodate a rotatable shaft (8), the opening has an inner diameter larger than an outer diameter of the rotatable shaft inserted thereinto substantially in a concentric relationship with the opening, and there is disposed a flux-leakage-proof member (16) between the outer periphery of the rotatable shaft (8) and the opening (15) of the yoke (21) so that the yoke (21) and the rotatable shaft (8) are integrally bonded to each other by way of the flux-leakage-proof member (16).

12. A rotor according to any preceding claim, wherein the yoke is provided on axially opposite end surfaces with balance weights (18) formed integrally with a flux-leakage-proof member from aluminium die cast material.

13. A rotor according to claim 11 or 12, wherein the flux-leakage-proof member is made of resin.

14. A rotor according to any preceding claim, wherein each permanent magnet (30, 31) is shorter than the axial length of the yoke (21) and a cavity defined within each slot (25) after insertion of the respective permanent magnet (30, 31) is filled with putty material of which the specific composition is selected depending on a gravity center displacement of an object to be rotationally driven so that the putty material when cured forms a balance weight (39).

15. A rotor according to any preceding claim, wherein a heat pipe (19) is embedded in the yoke (21) to be adjacent to the associated one of the permanent magnets (30, 31).

16. A rotor according to claim 1, wherein a projection (36) is provided at least at the upper or the lower portion of each slot (25).

17. A rotor according to any preceding claim, wherein a plurality of silicon steel sheets (22) have caulked recesses (23) adapted to be successively engaged with one another to achieve an integral lamination of these silicon steel sheets (22), and wherein the longer side of the caulked recess portion is inclined to an angle of 45° so as not to interfere with the line of magnetic force.

18. A rotor according to any preceding claim, wherein a hole is provided at the yoke (21) closer to the permanent magnets (30, 31) and between the permanent magnets (30, 31) and the rotational axis along the direction of the rotational axis.

19. A method of producing a rotor according to claim 1 for a brushless electromotor, comprising the steps of forming said slots (25) extending through said yoke (21) with the inner periphery of the yoke defining each slot provided with said projections (36), filling the slots with powder of magnetic material and mixed with epoxy binder, compression-molding this mixture in a magnetic field applied substantially in a radial direction with respect to a rotatable shaft (8) of the rotor and curing the compression-molded mixture with heat treatment to form the permanent magnets (30, 31) directly within the slots (25), with said projections (36), of the yoke (21).

20. A method according to claim 19, wherein the slots (25) are formed by stamping out a plurality of silicon steel sheets (22) into a configuration defining magnetic poles along its outer periphery and openings inside the magnetic poles to receive permanent magnets, and laminating the silicon steel sheets (22) in the same orientation around a common axis to form a yoke (21), the openings of the individual silicon steel sheets (22) defining said slots (25), with said projections (36), extending through said yoke (21).

21. A method according to claim 19, wherein the slots (25), with said projections (36), are formed by stamping out a plurality of silicon steel sheets (22) into a configuration defining magnetic poles along its outer periphery and openings inside the magnetic poles to accommodate permanent magnets, and laminating the silicon steel sheets (22) with the individual silicon steel sheets being successively displaced by a small angle around a rotatable shaft to form a yoke (21), the openings of the individual silicon steel sheets (22) defining said slots (25), with said projections (36).

## Patentansprüche

1. Rotor für einen bürstenlosen Motor, welcher ein Joch (21) hergestellt aus mehreren übereinandergeschichteten Siliziumstahlblechen (22) und entlang seines Außenumfanges mit einer geraden Anzahl magnetischer Pole (24a, 24b) versehen, in den magnetischen Polen vorgesehene Schlitze (25) für die Unterbringung von Permanentmagneten, und jeweils in den Schlitzen (25) untergebrachte Permanentmagnete (30, 31) aufweist, dadurch gekennzeichnet, daß: der jeden Schlitz (25) bildende Innenumfang des Jochs mit Vorsprüngen (36) versehen ist, welche dafür ausgelegt, in Eingriff mit dem entsprechenden Permanentmagneten (30, 31) zu stehen, wenn letzterer unter Kraftaufwand in den Schlitz eingeführt wird.

2. Rotor nach Anspruch 1, wobei mehrere Siliziumstahlbleche (22) verstemmte Vertiefungen (23) aufweisen, welche für einen sukzessiven Eingriff ineinander ausgelegt sind, um eine einstückige Übereinanderschichtung dieser Siliziumstahlbleche (22) zu erreichen und wobei die Vorsprünge (36) durch den Innenumfang der Siliziumstahlbleche gebildet werden, welche verformt werden, wenn die verstemmten Vertiefungen in der Nähe des Schlitzes hergestellt werden.

3. Rotor nach Anspruch 1 oder 2, wobei jeder Vorsprung (36) die Form eines dreieckigen Vorsprungs aufweist, der für den Eingriff mit einen Permanentmagneten (30, 31) angepaßt ist, eine Basis des den Vorsprung bildenden Dreiecks näher zu der Achse des Jochs (21) als zu dem den Schlitz (25) bildenden Innenumfang hin liegt, und am Umfang einander gegenüberliegende Seiten des dreieckigen Vorsprungs (36) mit dem den Schlitz (25) bildenden Innenumfang des Jochs (21) über Einkerbungen (38) verbunden sind, die an beiden Enden der Basis ausgebildet sind, um eine gewünschte Höhe des dreieckigen Vorsprungs (36) zu erzielen.

4. Rotor nach einem der vorstehenden Ansprüche, wobei die magnetischen Polflächen der magnetischen Pole (24a) mit den darin eingeführten Magneten (30, 31) jeweils eine Breite (W1) aufweisen, welche kleiner als die Breite (W2) der magnetischen Pole (24b) ist, welche keine Permanentmagnete aufweisen.

5. Rotor nach einem der vorstehenden Ansprüche, wobei die Schlitze (33) auf den magnetischen Polen mit den Permanentmagneten (30, 31) vorgesehen und außerhalb der Permanentmagnete und in Übereinstimmung mit der Richtung des Magnetismus und auf den magnetischen Polen ohne Permanentmagnet zur Führung des magnetischen Flusses angeordnet sind, um eine gleichförmige Verteilung des magnetischen Flusses über jedem Magneten zu erzeugen.

6. Rotor nach einem der vorstehenden Ansprüche, wobei Brükken (26) an gegenüberliegenden Enden jedes Schlitzes (25) vorgesehen sind, um so ein äußerstes Ende mit einer Basis des diesem Schlitz (25) zugeordneten magnetischen Pols zu verbinden, wobei die Brücken (26) eine ausreichend schmale Breite aufweisen, um sicherzustellen, daß eine Dichte des durch diese Brücken (26) verlaufenden magnetischen Flusses gesättigt ist.

7. Rotor nach einem der vorstehenden Ansprüche 1 bis 5, wobei Brücken (26) an gegenüberliegenden Enden jedes Schlitzes (25) vorgesehen sind, um so ein äußerstes Ende mit einer Basis des diesem Schlitz (25) zugeordneten magnetischen Pols zu verbinden, und die Brücken (26) jeweils mit Nuten (26a) ausgebildet sind, die dafür ausgelegt sind, einen Durchtritt des magnetischen Flusses zu begrenzen.

8. Rotor nach einem der vorstehenden Ansprüche, wobei nur eine Brücke (26) an nur einer Seite jedes Schlitzes (25) vorgesehen ist, um ein äußerstes Ende mit einer Basis des diesem Schlitz (25) zugeordneten magnetischen Pols zu verbinden, und diese Brücke in der Richtung der Rotation liegt.

9. Rotor nach Anspruch 8, wobei die Breite (26) der Brücke so gewählt ist, daß sie einen Leckfluß durch sich hindurch fließen läßt und eine Dicke des Permanentmagneten (30, 31) so gewählt ist, daß er einen Leckfluß an seinen axial gegenüberliegenden Enden erzeugt.

10. Rotor nach einem der vorstehenden Ansprüche, wobei Brükken (26) in jedem Schlitz (25) vorgesehen sind, um ein äußerstes Ende mit einer Basis des diesem Schlitz (25) zugeordneten magnetischen Pols zu verbinden, und die Enden (30a, 31a) des Permanentmagneten (30, 31), welche der Brücke gegenüberliegen, und axial gegenüberliegende Enden (30b, 31b) des Permanentmagneten mit nichtmagnetischen Material (32) abgedeckt sind.

11. Rotor nach einem der vorstehenden Ansprüche, wobei das Joch eine sich axial durch sich hindurch erstreckende Öffnung (15) für die Unterbringung einer Rotationswelle (8) aufweist, wobei die Öffnung einen Innendurchmesser besitzt, der größer als ein Außendurchmesser der darin in im wesentlichen in konzentrischer Beziehung zu der öffnung eingeführten Rotationswelle (8) ist, und ein Leckfluß-dichtes Element (16) zwischen dem Außenumfang der Rotationswelle (8) und der Öffnung (15) des Jochs (21) angeordnet ist, so daß das Joch (21) und die Rotationswelle (8) in einem Stück miteinander über das Leckfluß-dichte Element (16) verbunden sind.

12. Rotor nach einem der vorstehenden Ansprüche, wobei das Joch an axial gegenüberliegenden Endflächen mit Ausgleichsgewichten (18) versehen ist, welche in einem Stück mit einem Leckfluß-dichten Element aus einem Aluminiumdruckgußmaterial ausgebildet sind.

13. Rotor nach Anspruch 11 oder 12, wobei das Leckfluß-dichte Element aus Harz besteht.

14. Rotor nach einem der vorstehenden Ansprüche, wobei jeder Permanentmagnet (30, 31) kürzer als die axiale Länge des Jochs (21) ist und ein innerhalb jedes Schlitzes (25) nach dem Einführen des entsprechenden Permanentmagneten (30, 31) gebildeter Hohlraum mit einem Kittmaterial aufgefüllt wird, dessen spezifische Zusammensetzung abhängig von der Schwerpunktverschiebung eines in drehender Weise anzutreibenden Objektes so gewählt wird, daß das Kittmaterial nach der Aushärtung ein Ausgleichsgewicht (39) bildet.

15. Rotor nach einem der vorstehenden Ansprüche, wobei ein Wärmerohr (19) in dem Joch (21) so eingebettet ist, daß es in der Nähe des jeweils zugeordneten Permanentmagnetes (30, 31) liegt.

16. Rotor nach Anspruch 1, wobei ein Vorsprung (36) zumindest an dem oberen oder dem unteren Abschnitt des jedes Schlitzes (25) angeordnet ist.

17. Rotor nach einem der vorstehenden Ansprüche, wobei mehrere Siliziumstahlbleche (22) verstemmte Vertiefungen (23) aufweisen, welche dafür ausgelegt sind, sukzessiv in gegenseitigen Eingriff gebracht zu werden, um eine einstükkige Übereinanderschichtung dieser Siliziumstahlbleche (22) zu erreichen und wobei die längere Seite des verstemmten Vertiefungsabschnittes in einem Winkel von 45° geneigt ist, um so keine Störung für die Linien magnetischer Kraft zu bilden.

18. Rotor nach einem der vorstehenden Ansprüche, wobei ein Loch in dem Joch (21) näher an den Permanentmagneten (30, 31) und zwischen den Permanentmagneten (30, 31) und der Rotationsachse entlang der Rotationsachsenrichtung angeordnet ist.

19. Verfahren zum Herstellen eines Rotor gemäß Anspruch 1 für einen bürstenlosen Elektromotor, welches die Schritte aufweist: Herstellen der sich durch das Joch (21) hindurch erstreckenden Schlitze (25), wobei der jeden Schlitz bildende Innenumfang des Jochs mit den Vorsprüngen (36) versehen wird, Füllen der Schlitze mit einem Pulver eines magnetischen Materials, das mit einem Epoxid-Binder vermischt ist, Preßformen dieses Gemisches in einem magnetischen Feld, das im wesentlichen in radialer Richtung bezogen auf eine Rotationswelle (8) des Rotors angelegt ist, und Aushärten des preßgeformten Gemisches mittels einer Wärmebehandlung, so daß Permanentmagnete (30, 31) direkt in den Schlitzen (25) mit den Vorsprüngen (36) in dem Joch (21) erzeugt werden.

20. Verfahren nach Anspruch 19, wobei die Schlitze (25) durch Ausstanzen mehrerer Siliziumstahlbleche (22) in eine Konfiguration, die entlang ihres Außenumfangs magnetische Pole und Öffnungen innerhalb der magnetischen Pole für die Unterbringung von Permanentmagneten bildet, und durch Übereinanderschichten der Siliziumstahlbleche (22) in derselben Richtung um ein gemeinsame Achse herum zum Ausbilden eines Jochs (21) erzeugt werden, wobei die Öffnungen der einzelnen Siliziumstahlbleche (22) die sich durch das Joch (21) hindurch erstreckenden Schlitze (25) mit den Vorsprüngen (36) bilden.

21. Verfahren zum Herstellen eines Rotor gemäß Anspruch 19, wobei die Schlitze (25) mit den Vorsprüngen (36) durch Ausstanzen mehrerer Siliziumstahlbleche (22) in eine Konfiguration, die entlang ihres Außenumfangs magnetische Pole und Öffnungen innerhalb der magnetischen Pole für die Unterbringung von Permanentmagneten bildet, und durch Übereinanderschichten der Siliziumstahlbleche (22), wobei die einzelnen Siliziumstahlbleche sukzessiv um einen kleinen Winkel zur Bildung eines Jochs (21) versetzt werden, erzeugt werden und die Öffnungen der einzelnen Siliziumstahlbleche (22) die sich durch das Joch (21) hindurch erstreckenden Schlitze (25) mit den Vorsprüngen (36) bilden.

## Revendications

1. Rotor pour un moteur sans balais, comprenant un induit (21) formé de plusieurs tôles en acier au silicium (22) stratifiées ensemble, et présentant à sa périphérie extérieure un nombre pair de pôles magnétiques (24a, 24b), des fentes (25) prévues dans les pôles magnétiques pour loger des aimants permanents, et des aimants permanents (30, 31) logés dans les fentes (25) respectives, caractérisé en ce que
la périphérie intérieure de l'induit définissant chaque fente (25), est dotée de saillies (36) adaptées pour venir en prise avec l'aimant permanent correspondant (30, 31) lorsque ce dernier est enfoncé dans la fente.

2. Rotor selon la revendication 1, dans lequel plusieurs tôles en acier au silicium (22) présentent des creux matés (23) adaptés pour prendre successivement l'un dans l'autre pour obtenir une stratification d'un seul tenant de ces tôles en acier au silicium (22), et dans lequel les saillies (36) sont définies par les périphéries intérieures des tôles en acier au silicium déformées lorsque les creux matés sont formés à proximité de la fente.

3. Rotor selon les revendications 1 ou 2, dans lequel chacune des saillies (36) présente une saillie triangulaire adaptée pour venir en prise avec l'aimant permanent (30, 31), une base du triangle définissant la saillie étant située plus près de l'axe de l'induit (21) que de la périphérie intérieure de l'induit définissant la fente (25), et des côtés diamétralement opposés de la saillie triangulaire (36) sont reliés à la périphérie intérieure de l'induit (21) définissant la fente (25) par des entailles (38) formées aux deux extrémités de la base, pour obtenir la hauteur voulue de la saillie triangulaire (36).

4. Rotor selon l'une quelconque des revendications précédentes, dans lequel les surfaces des pôles magnétiques (24a) dans lesquels sont insérés les aimants (30, 31) présentent respectivement une largeur (W1) inférieure à celle des pôles magnétiques (24b) ne présentant pas d'aimant permanent (W2).

5. Rotor selon l'une quelconque des revendications précédentes, dans lequel des fentes (33) sont prévues sur lesdits pôles magnétiques avec lesdits aimants permanents (30, 31), et sont disposées à l'extérieur desdits aimants permanents et orientées en accord avec la direction du magnétisme, et sont disposées sur lesdits pôles magnétiques ne présentant pas d'aimants permanents, pour guider le flux magnétique en vue d'obtenir une répartition uniforme du flux magnétique de chaque aimant.

6. Rotor selon l'une quelconque des revendications précédentes, dans lequel des ponts (26) sont prévus aux extrémités opposées de chaque fente (25) de manière à relier une extrémité extérieure à une base du pôle magnétique associé à cette fente (25), les ponts (26) présentant une largeur suffisamment faible pour garantir qu'une densité du flux magnétique passant par ces ponts (26) est saturée.

7. Rotor selon l'une quelconque des revendications 1 à 5, dans lequel des ponts (26) sont prévus aux extrémités opposées de chaque fente (25), de manière à relier une extrémité extérieure à une base du pôle magnétique associé à cette fente (25), et les ponts (26) respectifs sont dotés de rainures (26a) adaptées pour limiter le passage du flux magnétique.

8. Rotor selon l'une quelconque des revendications précédentes, dans lequel un pont unique (26) est prévu d'un côté de chaque fente (25) pour relier une extrémité extérieure à une base du pôle magnétique associé à cette fente, et ledit pont est présent dans la direction de rotation.

9. Rotor selon la revendication 8, dans lequel la largeur du pont (26) est choisie de manière à permettre à un flux de fuite de le traverser, et une épaisseur de l'aimant permanent (30, 31) est choisie de manière à créer un flux de fuite à ses extrémités axialement opposées.

10. Rotor selon l'une quelconque des revendications précédentes, dans lequel des ponts (26) sont prévus dans chaque fente (25) pour relier une extrémité extérieure à une base du pôle magnétique associé à cette fente, et les extrémités (30a, 31a) de l'aimant permanent (30, 31) tournées vers le pont, et les extrémités (30b, 31b) axialement opposées de l'aimant permanent, sont recouvertes d'un matériau non magnétique (32).

11. Rotor selon l'une quelconque des revendications précédentes, dans lequel l'induit présente une ouverture (15) qui le traverse axialement, pour loger un arbre rotatif (8), l'ouverture présente un diamètre intérieur plus grand qu'un diamètre extérieur de l'arbre rotatif qui y est inséré essentiellement en relation de concentricité avec l'ouverture, et un organe (16) de blindage vis-à-vis du flux de fuite est disposé entre la périphérie extérieure de l'arbre rotatif (8) et l'ouverture (15) de l'induit (21), de telle sorte que l'induit (21) et l'arbre rotatif (8) sont liés d'un seul tenant l'un à l'autre au moyen de l'organe (16) de blindage vis-à-vis du flux de fuite.

12. Rotor selon l'une quelconque des revendications précédentes, dans lequel l'induit est doté sur ses surfaces d'extrémité opposées axialement de masses d'équilibrage (18) formés d'un seul tenant avec un organe de blindage vis-à-vis du flux de fuite réalisé en un matériau d'aluminium coulé.

13. Rotor selon les revendications 11 ou 12, dans lequel l'organe de blindage vis-à-vis du flux de fuite est réalisé en résine.

14. Rotor selon l'une quelconque des revendications précédentes, dans lequel chaque aimant permanent (30, 31) est plus court que la longueur axiale de l'induit (21), et une cavité définie dans chaque fente (25) après insertion de l'aimant permanent respectif (30, 31) est remplie d'un matériau de comblement dont la composition spécifique est choisie en fonction d'un déplacement du centre de masse d'un objet devant être entraîné en rotation, de telle sorte que, une fois durci, le matériau de remplissage forme une masse d'équilibrage (39).

15. Rotor selon l'une quelconque des revendications précédentes, dans lequel un conduit de chaleur (19) est incorporé dans l'induit (21) de manière à être contigu à celui des aimants permanents (30, 31) qui lui est associé.

16. Rotor selon la revendication 1, dans lequel une saillie (36) est prévue au moins à la partie supérieure ou à la partie inférieure de chaque fente (25).

17. Rotor selon l'une quelconque des revendications précédentes, dans lequel plusieurs tôles en acier au silicium (22) présentent des creux matés (23) adaptés pour prendre successivement l'un dans l'autre pour obtenir une stratification d'un seul tenant de ces tôles en acier au silicium (22), et dans lequel le long côté de la partie en creux matée est incliné suivant un angle de 45° de manière à ne pas interférer avec la ligne de force magnétique.

18. Rotor selon l'une quelconque des revendications précédentes, dans lequel un trou est prévu dans l'induit (21) en position plus proche des aimants permanents (30, 31), et entre les aimants permanents (30, 31) et l'axe de rotation dans la direction de l'axe de rotation.

19. Procédé de production d'un rotor selon la revendication 1 pour un moteur électrique sans balais, comprenant les étapes consistant à former lesdites fentes (25) traversant ledit induit (21), la périphérie intérieure de l'induit définissant chaque fente étant dotée desdites saillies (36), à remplir les fentes d'une poudre de matériau magnétique mélangée à un liant époxy, à mouler sous compression ce mélange dans un champ magnétique appliqué essentiellement dans une direction radiale par rapport à un axe de rotation (8) du rotor, et à durcir le mélange moulé par compression par un traitement thermique, pour former les aimants permanents (30, 31) directement dans les fentes (25), dotées desdites saillies (36), de l'induit (21).

20. Procédé selon la revendication 19, dans lequel les fentes (25) sont formées en poinçonnant plusieurs tôles en acier au silicium (22) dans une configuration définissant des pôles magnétiques le long de sa périphérie extérieure et des ouvertures à l'intérieur des pôles magnétiques, pour recevoir des aimants permanents, et en stratifiant les tôles en acier au silicium (22) dans la même orientation autour d'un axe commun, pour former un induit (21), les ouvertures des tôles individuelles en acier au silicium (22) définissant lesdites fentes (25) dotées desdites saillies (36) traversant ledit induit (21).

21. Procédé selon la revendication 19, dans lequel les fentes (25) dotées desdites saillies (36) sont formées en poinçonnant plusieurs tôles en acier au silicium (22) dans une configuration définissant des pôles magnétiques le long de sa périphérie extérieure et des ouvertures à l'intérieur des pôles magnétiques, pour loger des aimants permanents, et en stratifiant les tôles (22) en acier au silicium, les tôles individuelles en acier au silicium étant successivement décalées d'un petit angle autour d'un arbre de rotation pour former un induit (21), les ouvertures des tôles individuelles en acier au silicium (22) définissant lesdites fentes (25) dotées desdites saillies (36).
